# EUROPEAN PATENT SPECIFICATION

(11) **EP 3 538 247 B1**
(45) Date of publication and mention of the grant of the patent: **16.03.2022**
(21) Application number: 17869690.2
(22) Date of filing: 10.11.2017
(51) Int. Cl.: B01D 39/16, B01D 39/18, B01D 39/02

(54) **FILTER MEDIA HAVING A DENSITY VARIATION**
FILTERMEDIEN MIT DICHTEVERÄNDERUNG
MILIEU FILTRANT AYANT UNE VARIATION DE DENSITÉ

(30) Priority: 11.11.2016 US 201615349310
(43) Date of publication of application: 18.09.2019
(73) Proprietor: Hollingsworth & Vose Company, East Walpole, MA 02032 (US)
(72) Inventor: SCHÄFER, Sandra, 35088 Battenberg (DE); BATTENFELD, Juergen, 35088 Battenberg (DE); AHRENS, Felix, 35088 Battenberg (DE)
(74) Representative: Hoffmann Eitle
(86) International application number: PCT/US2017/061060
(87) International publication number: WO 2018/089766

(56) References cited:
- US-A- 4 731 135
- US-A1- 2009 301 042
- US-A1- 2015 321 124
- US-B2- 8 398 752

## Description

### FIELD

The present invention relates generally to filter media and, more particularly, to filter media having a density variation.

### BACKGROUND

Filter media can be used to remove contamination in a variety of applications. Depending on the application, the filter media may be designed to have different performance characteristics. For example, filter media may be designed to have performance characteristics suitable for hydraulic applications which involve filtering contamination in pressurized fluids.

In general, filter media can be formed of a web of fibers. For example, the web may include synthetic fibers amongst other components. The fiber web provides a porous structure that permits fluid (e.g., hydraulic fluid) to flow through the filter media. Contaminant particles contained within the fluid may be trapped on the fibrous web. Filter media characteristics, such as fiber diameter and basis weight, affect filter performance including filter efficiency, dust holding capacity and resistance to fluid flow through the filter.

There is a need for filter media that can be used in hydraulic applications which has a desirable balance of properties including a high dust holding capacity and a low resistance to fluid flow (high permeability) across the filter media.

US 2009/301042 A1 discloses a filter for an internal combustion engine air intake comprised of a synthetic fiber media uniquely enhanced with a gradient density configuration.

US 4,731,135 A discloses a filter for removing dusts from fluids, which comprises fibers bonded to each other with a binder and/or hot-pressed, having a fiber density of 0.01 to 0.1 at the side of inflow of fluid to be treated and a fiber density of 0.05 to 0.5 at the side of outflow of the fluid with a continuous fiber density gradient and having a uniform distribution of fiber material in direction of thickness.

### SUMMARY

The present invention is directed to the filter media of claim 1 and the hydraulic filter element of claim 15. The dependent claims refer to preferred embodiments.

Filter media as well as related components and methods associated therewith are provided.

According to the invention, the filter media comprises a first layer comprising synthetic fibers.

The weight of the synthetic fibers in the first layer comprises at least 90% of the total weight of the fibers in the first layer. The first layer has a bottom surface, a top surface, a thickness that extends from the bottom surface to the top surface, and a density that changes from a maximum density to a minimum density. The density changes non-linearly with thickness from the top surface to the bottom surface. The change in density between the bottom surface to a dimensional thickness of 0.25 from the bottom surface is less than 20% of the maximum density, and the change in density between a dimensional thickness of 0.5 from the bottom surface to 0.75 from the bottom surface is less than 20% of the maximum density.

Other advantages and novel features of the present invention will become apparent from the following detailed description of various non-limiting embodiments of the invention when considered in conjunction with the accompanying figures.

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
FIG. 1A schematically illustrates a filter media according to some embodiments described herein.
FIG. 1B shows a schematic two step density curve for an exemplary pre-filter according to some embodiments described herein.
FIGS. 2A-2D schematically illustrate filter media according to some embodiments described herein.
FIGS. 3A and 3B respectively show density curves for a pre-filter with a linear density curve and a pre-filter with a two-step density curve as described in Example 1.
FIG. 4 is an SEM image of a pre-filter having a two-step density curve as described in Example 1.
FIGS. 5A and 5B show dust holding capacity data for various filter media as described in Example 2.

### DETAILED DESCRIPTION

Filter media as well as related components and methods are described herein. In general, the filter media comprises one or more layers including, for example, a pre-filter layer and main filter layer(s). The filter media may have a density that varies across at least a portion of its thickness. For example, the density may change across at least a portion of the thickness of at least one of the layers (e.g., a pre-filter layer). As described further below, the density may change non-linearly with thickness of the layer. The filter media described herein may have several advantages including a high dust holding capacity, low pressure drop and high beta efficiency. In some cases, the filter media may have favorable properties as compared to filter media which have equivalent densities at both the top and bottom surfaces but a different density variation (e.g., a linear variation). In some embodiments, the filter media may include a high percentage of synthetic fibers and, therefore, may not have disadvantages commonly associated with filter media including a higher percentage of glass fibers.

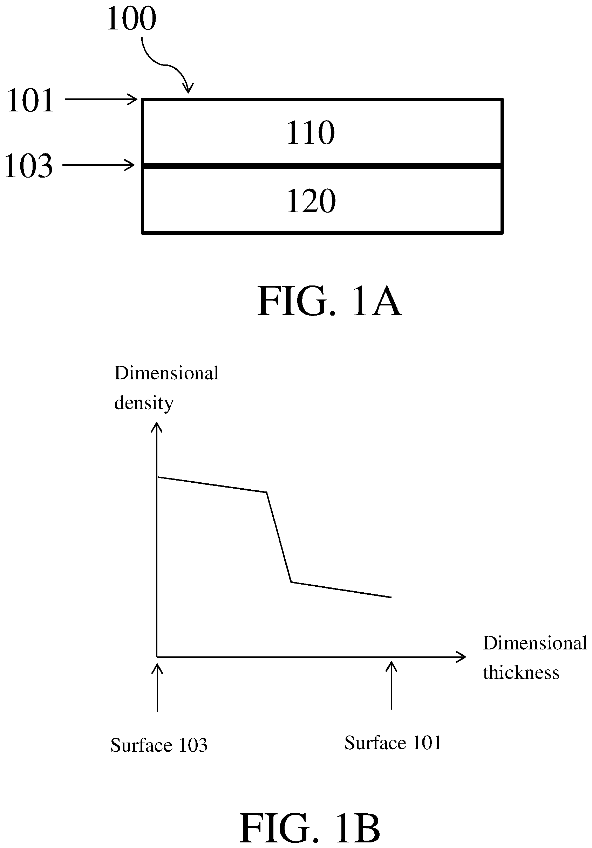

A non-limiting example of a filter media is shown in FIG. 1A. Filter media 100 comprises a first layer 110 and a second layer 120. First layer 110 includes a top surface 101 and a bottom surface 103. As described further below, it should be understood that, optionally, the filter media may further comprise additional layers such as a third layer and/or a fourth layer, etc. The orientation of filter media 100 relative to fluid flow through the filter media can generally be selected as desired. In some embodiments, first layer 110 is upstream of second layer 120.

As used herein, when a layer or region is referred to as being "on" or "adjacent" another layer or region, it can be directly on or adjacent the layer or region, or an intervening layer or region also may be present. A layer or region that is "directly on", "directly adjacent" or "in contact with" another layer or region means that no intervening layer or region is present.

In some cases, each of the layers of the filter media has different characteristics and filtration properties that, when combined, result in desirable overall filtration performance, for example, as compared to a filter media having a single-layered structure. For example, in one set of embodiments, first layer 110 is a pre-filter layer and second layer 120 is a main filter layer. In some embodiments, as described further below, the pre-filter layer may be formed using coarser fibers and, accordingly, may have a lower resistance to fluid flow than that of the main filter layer(s). The main filter layer(s) may include finer fibers and have a higher resistance to fluid flow than that of the pre-filter layer. As such, a main filter layer can generally trap particles of smaller size compared to the pre-filter layer. As described further below, pre-filter media having the non-linear density variation described herein may advantageously trap high amounts of dust particles which can enhance main filter performance and lifetime.

As noted above, each of the layers of the filter media can have different properties. For instance, the first and second layers can include fibers having different characteristics (e.g., fiber diameters, fiber compositions, and fiber lengths). Fibers with different characteristics can be made from one material (e.g., by using different process conditions) or different materials (e.g., different types of fibers).

As described above, the density of a layer (e.g., pre-filter layer) varies across a thickness of the layer (e.g., from bottom surface to top surface). The density change across a layer may be characterized using a concept referred to herein as "dimensional density". The dimensional density (D) is the actual density (D_{actual}) measured at a certain location (e.g., thickness) divided by the maximum density (Dₘₐₓ) within the layer. Therefore, dimensional density is a measure of the fraction of the maximum density of a layer and may be calculated as D = D_{actual} / Dₘₐₓ. Similarly, the term "dimensional thickness" may be used herein. The dimensional thickness (T) is the actual thickness (T_{actual}) between a location within the layer and a surface (e.g., bottom surface) of the layer, divided by the maximum thickness (Tₘₐₓ) of the layer. Therefore, dimensional thickness is a measure of the fraction of the maximum thickness and may be calculated as T = T_{actual} / Tₘₐₓ.

In some embodiments, the dimensional density of a pre-filter may increase from its top (e.g., upstream surface) to its bottom (e.g. downstream) surface. As described above, the rate of density increase may not be constant through the thickness of the pre-filter and, therefore, the density may change non-linearly with thickness. For example, the density may change non-linearly with the dimensional thickness, which is the ratio of the distance of a point from the bottom surface of the pre-filter to the distance of the top surface of the pre-filter to the bottom surface of the pre-filter. In certain embodiments, there may be portions (e.g., referred to herein as "steps") of the pre-filter across which the density is relatively constant and portions of the pre-filter across which the density is more variable. In some embodiments, there may be step changes in density within the pre-filter, or changes between two portions of the pre-filter with relatively constant density. In certain embodiments, the pre-filter may comprise two steps of relatively constant density; such a pre-filter may be referred to as a two-step density filter. FIG. 1B shows a schematic illustration of one non-limiting two-step density curve, where the density increases from top surface 101 to bottom surface 103 in a step-wise manner. It should also be understood that there can be more than two steps of constant density within the pre-filter; for example, there may be three, four, or more steps of constant density.

A relatively small change in the density of the pre-filter in the portion of the pre-filter adjacent the bottom surface (e.g., the downstream surface) is contemplated. The change in density between the bottom surface to a dimensional thickness of 0.25 from the bottom surface is less than 20% of the maximum density, preferably, less than 15% of the maximum density, less than 12% of the maximum density, less than 10% of the maximum density, or less than 5% of the maximum density. In some embodiments, the change in density between the bottom surface to a dimensional thickness of 0.35 from the bottom surface is less than 20% of the maximum density, less than 15% of the maximum density, less than 12% of the maximum density, less than 10% of the maximum density, or less than 5% of the maximum density. In some embodiments, the change in density between the bottom surface to a dimensional thickness of 0.20 from the bottom surface is less than 20% of the maximum density, less than 15% of the maximum density, less than 12% of the maximum density, less than 10% of the maximum density, or less than 5% of the maximum density. Other ranges are also possible.

A relatively small change in the density of the pre-filter in a portion of the pre-filter near the center of the pre-filter is contemplated. The change in density between a dimensional thickness of 0.5 from the bottom surface to a dimensional thickness of 0.75 from the bottom surface is less than 20% of the maximum density, preferably, less than 15% of the maximum density, less than 10% of the maximum density, or less than 5% of the maximum density. In certain embodiments, the change in density between a dimensional thickness of 0.5 from the bottom surface to a dimensional thickness of 0.65 from the bottom surface is less than 20% of the maximum density, less than 15% of the maximum density, less than 10% of the maximum density, or less than 5% of the maximum density. In certain embodiments, the change in density between a dimensional thickness of 0.5 from the bottom surface to a dimensional thickness of 0.7 from the bottom surface is less than 20% of the maximum density, less than 15% of the maximum density, less than 10% of the maximum density, or less than 5% of the maximum density. Other ranges are also possible.

In certain embodiments, a portion of the pre-filter near the center of the pre-filter may have a density that is between about 50% and about 80%, or between about 60% and about 75% or between about 65% and about 75% of the maximum density. For example, in some embodiments, the pre-filter may have a density within these ranges from a dimensional thickness 0.5 from the bottom surface to a dimensional thickness of 0.75 from the bottom surface, from a dimensional thickness of 0.5 from the bottom surface to a dimensional thickness of 0.7 from the bottom surface, or from a dimensional thickness of 0.5 from the bottom surface to a dimensional thickness of 0.65.

It should be understood that other combinations of changes in density and density in different portions of the pre-filter are also possible.

The density and density profile (i.e., density changes with thickness) of any layer within the filter media may be characterized by any suitable technique. One such technique uses a QTRS Tree ring scanner and data analyzer model no. QTRS-01X (Quintek Measurement Systems, Knoxville, TN). Such technique passes an X-ray beam through the filter media sample and compares the observed transmitted intensity to intensity transmitted by a sample with a known density. Then, the density of the filter media sample can be determined using the Lambert-Beer law.

In some embodiments, one or more of the layers (e.g., pre-filter) of the filter media may be divided into two or more regions, where each region has a different dimensional density from any region to which it is adjacent. As described further below, each region may be formed of different fiber type(s). A region of the pre-filter is defined as the portion of the pre-filter formed from the same type of fibers. It should be understood that "type of fibers" in this context may include a blend of fibers. For example, a first region of the pre-filter is formed from a first type of fibers and a second region of the pre-filter is formed from a second type of fibers. As described further below, in some cases, the top region (adjacent a top surface of the pre-filter) may comprise a fiber type having a coarser average diameter than the fiber type in the bottom region (adjacent a bottom surface of the pre-filter). The different fiber types can lead to different regions having different densities and which may be combined to produce the desired density variation

The dimensional density of a pre-filter including two or more regions may be profiled (e.g., using the technique described above) in the thickness direction (normal to the surface of the pre-filter) to observe the variation in dimensional density across the thickness of the pre-filter. This variation can show that the dimensional density of the pre-filter changes from a first region to a second region. As described further below, a transition zone separates the first region from the second region and has dimensional density that varies from that of the adjacent portion of the first region to that of the adjacent portion of the second region.

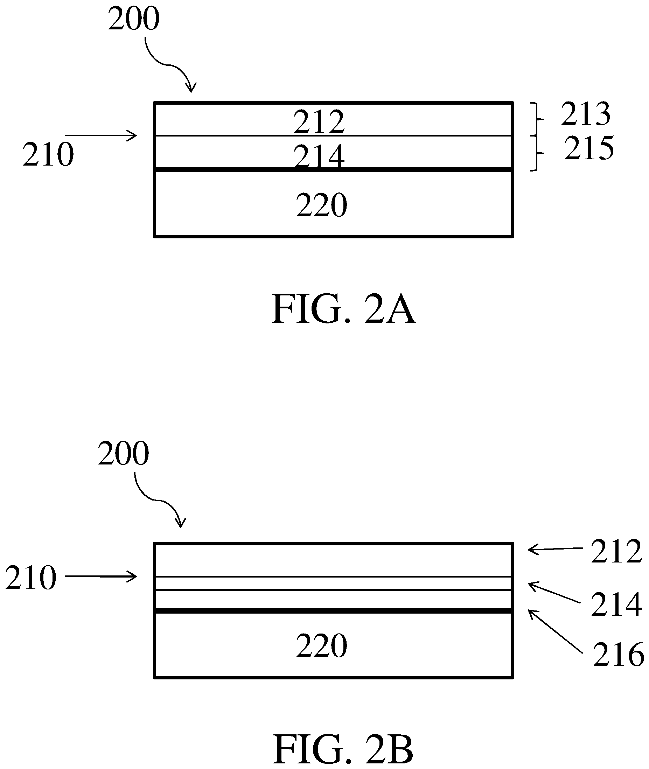

FIG. 2A shows a non-limiting example of a filter media 200 comprising a first layer 210 (e.g., pre-filter layer) and a second layer 220 (e.g., main filter layer). First layer 210 (e.g., pre-filter) comprises first region 212 with thickness 213 and second region 214 with thickness 215. According to certain embodiments, the first layer may comprise first region 212, second region 214, and third region 216, with associated thicknesses, as shown illustratively in FIG. 2B. It should also be understood that in some embodiments a fiber web may comprise more than three regions, such as four regions, five regions, or even more regions, each of which have different dimensional densities than any region to which they are adjacent..

In certain embodiments, one or more regions within the pre-filter have relatively constant density and dimensional density. In such embodiments, the relatively constant density steps described herein are defined within such regions.

In some embodiments, the pre-filter may comprise a first region (e.g., top region) of relatively low dimensional density. In some embodiments, the dimensional density in the first region may be less than or equal to 0.75, less than or equal to 0.725, less than or equal to 0.70, less than or equal to 0.675, less than or equal to 0.65, less than or equal to 0.60, less than or equal to 0.55, or less than or equal to 0.50. In certain embodiments, the dimensional density of the first region may be greater than or equal to 0.5, greater than or equal to 0.55, greater than or equal to 0.60, greater than or equal to 0.65, greater than or equal to 67.5, greater than or equal to 0.70, or greater than or equal to 0.725. Combinations of the above-referenced ranges are also possible (e.g., greater than or equal to 0.65 and less than or equal to 0.75). Other ranges are also possible.

In some embodiments, a pre-filter may comprise a first region and the variation in density within the first region of the pre-filter may be relatively small. In some embodiments, the change in density across the first region may be less than or equal to 50% of the maximum density, less than or equal to 45% of the maximum density, less than or equal to 40% of the maximum density, less than or equal to 35% of the maximum density, less than or equal to 30% of the maximum density, less than or equal to 25% of the maximum density, less than or equal to 20% of the maximum density, less than or equal to 15% of the maximum density, less than or equal to 10% of the maximum density, or less than or equal to 5% of the maximum density. In certain embodiments, the change in density across the first region may be greater than or equal to 5% of the maximum density, greater than or equal to 10% of the maximum density, greater than or equal to 15% of the maximum density, greater than or equal to 20% of the maximum density, greater than or equal to 25% of the maximum density, greater than or equal to 30% of the maximum density, greater than or equal to 35% of the maximum density, greater than or equal to 40% of the maximum density, or greater than or equal to 45% of the maximum density. Combinations of the above-referenced ranges are also possible. Other ranges are also possible.

In certain embodiments, a pre-filter may comprise a first region and the first region (e.g., top region) may include at least a portion located in approximately the middle of the pre-filter. For instance, in some embodiments, a pre-filter may comprise a first region that extends at least from a dimensional thickness of 0.5 to a dimensional thickness of 0.75, from a dimensional thickness of 0.5 to a dimensional thickness of 0.7, or from a dimensional thickness of 0.5 to a dimensional thickness of 0.65 (with dimensional thickness being measured from the bottom surface of the pre-filter). It should be understood that the first region may extend across portion(s) of the pre-filter outside the above-mentioned ranges.

In certain embodiments, the pre-filter may comprise a second region and the dimensional density of the second region (e.g., bottom region) of the pre-filter may be relatively high. In some embodiments, the dimensional density of the second region of the pre-filter may be between 0.6 and 1, 0.7 and 1, 0.8 and 1, between 0.9 and 1, or between 0.95 and 1. Other ranges are also possible. In some embodiments, the maximum density of the pre-filter is found within the second region.

In some embodiments which comprise a second region, the change in density across the second region may be less than or equal to 50% of the maximum density, less than or equal to 45% of the maximum density, less than or equal to 40% of the maximum density, less than or equal to 35% of the maximum density, less than or equal to 30% of the maximum density, less than or equal to 25% of the maximum density, less than or equal to 20% of the maximum density, less than or equal to 15% of the maximum density, less than or equal to 10% of the maximum density, or less than or equal to 5% of the maximum density. In certain embodiments, the change in density across the second region may be greater than or equal to 5% of the maximum density, greater than or equal to 10% of the maximum density, greater than or equal to 15% of the maximum density, greater than or equal to 20% of the maximum density, greater than or equal to 25% of the maximum density, greater than or equal to 30% of the maximum density, greater than or equal to 35% of the maximum density, greater than or equal to 40% of the maximum density, or greater than or equal to 45% of the maximum density. Combinations of the above-referenced ranges are also possible. Other ranges are also possible.

In certain embodiments, the pre-filter may comprise a second region and the second region may be located in the bottom portion of the pre-filter. In some such embodiments, the second region may extend at least from a dimensional thickness of 0 to a dimensional thickness of 0.2, from a dimensional thickness of 0 to a dimensional thickness of 0.25, or from a dimensional thickness of 0 to a dimensional thickness of 0.35 (with dimensional thickness being measured from the bottom surface of the pre-filter). It should be understood that the second region may extend across portion(s) of the pre-filter outside the above-mentioned ranges.

According to certain embodiments, as described above, there may be a transition zone between the first region of the pre-filter and the second region of the pre-filter. The transition zone may include fibers from the first region and fibers from the second region. For example, the fibers from the first region and fibers from the second region may be intermingled. In some such embodiments, the thickness of the transition zone may be very small.

As described above, in some embodiments, the filter media may comprise a first layer which is a pre-filter. The pre-filter may be the first layer encountered by fluid (e.g., hydraulic, water, air) flowing through the filter media, and for this reason it may be beneficial for the pre-filter to capture a large amount of the dust to which the filter is exposed and/or to have a high dust holding capacity. In some embodiments, it may be advantageous for the pre-filter to capture more dust than any other layer within the filter media. As described further below, the non-linear density variation may enable the pre-filter to be particularly effective in capturing dust. Certain chemical and physical properties of the pre-filter that may enable it to perform beneficially in this application are described below.

It should also be understood that any physical or chemical properties and the associated methods for measuring them which are described below in relation to the pre-filter or any layer or region within the pre-filter have the same meaning and may be determined in the same way for any other layer or region within the filter media, such as, for example, a different region within the pre-filter or a different layer, such as the main filter, within the filter media.

In some embodiments, the pre-filter is a fiber web (e.g., non-woven) comprising synthetic fibers. In some embodiments, the synthetic fibers may comprise one or more thermoplastic polymer. Non-limiting examples of suitable thermoplastic polymers include polyesters such as poly(butylene terephthalate), poly(butylene naphthalate), poly(ethylene terephthalate) (PET), polyolefins such as polyethylene and polypropylene, polyamides such as nylon, polyalkylenes, polyacrylonitriles, polyphenylene sulfides, polycarbonates, thermoplastic polyurethanes, and polystyrene. In certain embodiments, the synthetic fibers may comprise modified cellulosic fibers, such as modified cellulosic staple fibers. The synthetic fibers may also comprise a blend where at least one component is a thermoplastic polymer and/or modified cellulose.

In one set of embodiments, the synthetic fibers comprise bicomponent fibers. Some embodiments include a blend of synthetic fibers at least some of which comprise bicomponent fibers. Each component of the bicomponent fiber can have a different melting temperature. For example, the fibers can include a core and a sheath where the activation temperature of the sheath is lower than the melting temperature of the core. This allows the sheath to melt prior to the core, such that the sheath binds to other fibers in the layer, while the core maintains its structural integrity. This is particularly advantageous in that it creates a more cohesive layer for trapping filtrate. The core/sheath binder fibers can be concentric or non-concentric, and exemplary core/sheath binder fibers can include the following: a polyester core/copolyester sheath, a polyester core/polyethylene sheath, a polyester core/polypropylene sheath, a polypropylene core/polyethylene sheath, and combinations thereof. In some embodiments, the bicomponent fibers may be splitting fibers, which comprise a sheath that is capable of melting away to reveal a core with a smaller diameter. Such fibers may be capable of forming fine fibers with large surface areas after the sheath has melted. Other exemplary bicomponent fibers can include side-by-side fibers and/or "island in the sea" fibers. In some embodiments, the bicomponent fibers may enhance the mechanical properties of the fiber web and/or provide other performance advantages.

In certain embodiments, the synthetic fibers may comprise other types of splitting fibers, in addition to bicomponent splitting fibers, such as splitting fibers which can be split by mechanical or chemical means.

In some embodiments, the synthetic fibers comprise fibrillated fibers. Some embodiments include a blend of synthetic fibers at least some of which comprise fibrillated fibers. As known to those of ordinary skill in the art, a fibrillated fiber includes a parent fiber that branches into smaller diameter fibrils, which can, in some instances, branch further out into even smaller diameter fibrils with further branching also being possible. The branched nature of the fibrils leads to a high surface area and can increase the number of contact points between the fibrillated fibers and the fibers in the fiber web. Such an increase in points of contact between the fibrillated fibers and other fibers and/or components of the web may contribute to enhancing mechanical properties (e.g., flexibility, strength) and/or filtration performance properties of the fiber web.

According to certain embodiments, the synthetic fibers comprise melting fibers. Some embodiments include a blend of synthetic fibers at least some of which comprise melting fibers. In some embodiments, melting fibers may comprise fibers which undergo a structural transition at a temperature less than or equal to a maximum temperature achieved during formation of the pre-filter. The structural transition can take any form, such as a transition from a partially or fully crystalline microstructure to a partially or fully amorphous microstructure and/or a transition from a glass to a liquid. The structural transition can be measured by, for example, differential scanning calorimetry (DSC). In certain embodiments, the synthetic fibers may comprise melting fibers which undergo a structural transition at a temperature of greater than or equal to 60°C, greater than or equal to 70°C, greater than or equal to 80°C, or greater than or equal to 90°C. In some embodiments, the synthetic fibers may comprise melting fibers which undergo a structural transition at a temperature of less than or equal to 105°C, less than or equal to 90°C, less than or equal to 80°C, or less than or equal to 70°C. Combinations of the above-referenced ranges are also possible (e.g., greater than or equal to 60°C and less than or equal to 80°C or greater than or equal to 60°C and less than or equal to 105°C). Other ranges are also possible. In some embodiments, the melting fibers comprise poly(vinyl alcohol) fibers. In certain embodiments, the melting fibers may enhance the mechanical properties of the fiber web and/or provide other performance advantages.

It is contemplated that the pre-filter comprises a relatively high weight percentage of synthetic fibers with respect to the total weight of fibers in the pre-filter. The pre-filter comprises a weight percentage of synthetic fibers that is greater than or equal to 90 wt%, preferably greater than or equal to 95 wt%, or greater than or equal to 99 wt%. In some embodiments, substantially all of the fibers in the pre-filter are synthetic fibers. In some embodiments, the pre-filter may comprise a weight percentage of synthetic fibers that is less than or equal to 100 wt%, less than or equal to 99 wt%, less than or equal to 95 wt%, less than or equal to 90 wt%, or less than or equal to 75 wt%, or less than or equal to 60 wt%,. Combinations of the above-referenced ranges are also possible (e.g., greater than or equal to 50 wt% and less than or equal to 100 wt% or greater than or equal to 75 wt% and less than or equal to 95 wt%). Other ranges are also possible.

It should be understood that, in certain embodiments, the pre-filter may not include a majority of synthetic fibers (i.e., the pre-filter comprises less than 50 wt% synthetic fibers with respect to the total weight of fibers in the pre-filter); and, in certain embodiments, the pre-filter may not include any synthetic fibers at all.

In certain embodiments, the pre-filter may comprise a blend of synthetic fibers. That is, the pre-filter may comprise more than one type of synthetic fiber. As described further below, in some embodiments, the pre-filter may comprise a blend of synthetic fibers comprising one or more of the following fiber types: coarse staple fibers, fine staple fibers, and fibrillated fibers.

According to certain embodiments, the pre-filter may comprise synthetic fibers which are coarse staple fibers. The coarse staple fibers in the pre-filter may comprise one or more thermoplastic polymers. The thermoplastic polymers may be polyesters such as poly(butylene terephthalate), poly(butylene naphthalate), poly(ethylene terephthalate) (PET), polyolefins such as polyethylene and polypropylene, polyamides such as nylon, polyalkylenes, polyacrylonitriles, poly(lactic acid), polyphenylene sulfides, polycarbonates, polystyrene, and thermoplastic polyurethanes. In some embodiments, polyester staple fibers are preferred.

The coarse staple fibers of the pre-filter may have any suitable diameter. In some embodiments, the average diameter of the coarse staple fibers in the pre-filter is at least 1 micron, at least 3 microns, at least 4 microns, at least 6 microns, at least 8 microns, at least 10 microns, at least 12 microns, at least 14 microns, or at least 16 microns. In some embodiments, the average diameter of the coarse staple fibers in the pre-filter is less than 18 microns, less than 16 microns, less than 14 microns, less than 12 microns, less than 10 microns, less than 8 microns, or less than 6 microns. Combinations of the above-referenced ranges are also possible (e.g., at least 4 microns and less than 18 microns). Other ranges are also possible.

In some embodiments, at least 10 wt% of the synthetic fibers in the pre-filter may be coarse staple fibers, at least 20 wt% of the synthetic fibers in the pre-filter may be coarse staple fibers, at least 30 wt% of the synthetic fibers in the pre-filter may be coarse staple fibers, at least 40 wt% of the synthetic fibers in the pre-filter may be coarse staple fibers, at least 50 wt% of the synthetic fibers in the pre-filter may be coarse staple fibers, at least 60 wt% of the synthetic fibers in the pre-filter may be coarse staple fibers, at least 70 wt% of the synthetic fibers in the pre-filter may be coarse staple fibers, at least 80 wt% of the synthetic fibers in the pre-filter may be coarse staple fibers, or at least 90 wt% of the synthetic fibers in the pre-filter may be coarse staple fibers. In some embodiments, less than 100 wt% of the synthetic fibers in the pre-filter may be coarse staple fibers, less than 90 wt% of the synthetic fibers in the pre-filter may be coarse staple fibers, less than 80 wt% of the synthetic fibers in the pre-filter may be coarse staple fibers, less than 70 wt% of the synthetic fibers in the pre-filter may be coarse staple fibers, less than 60 wt% of the synthetic fibers in the pre-filter may be coarse staple fibers, less than 50 wt% of the synthetic fibers in the pre-filter may be coarse staple fibers, less than 40 wt% of the synthetic fibers in the pre-filter may be coarse staple fibers, less than 30 wt% of the synthetic fibers in the pre-filter may be coarse staple fibers, less than 20 wt% of the synthetic fibers in the pre-filter may be coarse staple fibers, or less than 10 wt% of the synthetic fibers in the pre-filter may be coarse staple fibers. Combinations of the above-referenced ranges are also possible (e.g., at least 80 wt% and less than 100 wt% of the synthetic fibers in the pre-filter may be coarse staple fibers). Other ranges are also possible.

In certain embodiments in which the pre-filter comprises at least one region, the first region (e.g., a top region) of the pre-filter may comprise a relatively high amount of coarse staple fibers. In certain embodiments, the pre-filter may comprise a first region and at least 80 wt% of the synthetic fibers in the first region may be coarse staple fibers, at least 85 wt% of the synthetic fibers in the first region may be coarse staple fibers, at least 90 wt% of the synthetic fibers in the first region may be coarse staple fibers, or at least 95 wt% of the synthetic fibers in the first region may be coarse staple fibers. In certain embodiments, the pre-filter may comprise a first region and less than 100 wt% of the synthetic fibers in the first region may be coarse staple fibers, less than 95 wt% of the synthetic fibers in the first region may be coarse staple fibers, less than 90 wt% of the synthetic fibers in the first region may be coarse staple fibers, or less than 85 wt% of the synthetic fibers in the first region may be coarse staple fibers. Combinations of the above-referenced ranges are also possible (e.g., at least 80 wt% and less than 100 wt% of the synthetic fibers in the first region may be coarse staple fibers). Other ranges are also possible.

In certain embodiments in which the pre-filter comprises at least two regions, the second region (e.g., a bottom region) of the pre-filter may comprise a moderate amount of coarse staple fibers. In certain embodiments, the pre-filter may comprise a second region and at least 30 wt% of the synthetic fibers in the second region may be coarse staple fibers, at least 40 wt% of the synthetic fibers in the second region may be coarse staple fibers, at least 50 wt% of the synthetic fibers in the second region may be coarse staple fibers, at least 60 wt% of the synthetic fibers in the second region may be coarse staple fibers, or at least 70 wt% of the synthetic fibers in the second region may be coarse staple fibers. In certain embodiments, the pre-filter may comprise a second region and less than 80 wt% of the synthetic fibers in the second region may be coarse staple fibers, less than 70 wt% of the synthetic fibers in the second region may be coarse staple fibers, less than 60 wt% of the synthetic fibers in the second region may be coarse staple fibers, less than 50 wt% of the synthetic fibers in the second region may be coarse staple fibers, or less than 40 wt% of the synthetic fibers in the second region may be coarse staple fibers. Combinations of the above-referenced ranges are also possible (e.g., at least 30 wt% and less than 80 wt% of the synthetic fibers in the second region may be coarse staple fibers). Other ranges are also possible.

According to certain embodiments, the pre-filter may comprise synthetic fibers which are fine staple fibers. For example, the fine staple fibers may comprise one or more of poly(ethylene terephthalate) (PET), nylon, poly(lactic acid), polyesters, and copolyesters. In some embodiments, the fine staple fibers may comprise modified poly(ethylene terephthalate (PET) fibers such as Cyphrex^{™} fibers manufactured by Eastman Chemical Company. In some embodiments, the fine staple fibers may comprise bicomponent fibers, such as splitting fibers. In certain embodiments, the fine staple fibers may comprise other types of splitting fibers, in addition to bicomponent splitting fibers, such as splitting fibers which can be split by mechanical or chemical means.

The fine staple fibers may have any suitable diameter. In some embodiments, the average diameter of the fine staple fibers in the pre-filter is at least 1 micron, at least 1.5 microns, at least 2 microns, at least 2.5 microns, at least 3 microns, or at least 3.5 microns. In some embodiments, the average diameter of the fine staple fibers in the pre-filter is less than 4 microns, less than 3.5 microns, less than 3 microns, less than 2.5 microns, less than 2 microns, or less than 1.5 microns. Combinations of the above-referenced ranges are also possible (e.g., at least 1.5 microns and less than 4 microns). Other ranges are also possible.

In some embodiments, the pre-filter may comprise a defined percentage of fine staple fibers. In some embodiments, at least 2.5 wt% of the synthetic fibers in the pre-filter may be fine staple fibers, at least 8 wt% of the synthetic fibers in the pre-filter may be fine staple fibers, at least 10 wt% of the synthetic fibers in the pre-filter may be fine staple fibers, at least 12 wt% of the synthetic fibers in the pre-filter may be fine staple fibers, at least 14 wt% of the synthetic fibers in the pre-filter may be fine staple fibers, at least 16 wt% of the synthetic fibers in the pre-filter may be fine staple fibers, at least 18 wt% of the synthetic fibers in the pre-filter may be fine staple fibers, at least 20 wt% of the synthetic fibers in the pre-filter may be fine staple fibers, at least 30 wt% of the synthetic fibers in the pre-filter may be fine staple fibers, or at least 40 wt% of the synthetic fibers in the pre-filter may be fine staple fibers. In some embodiments, less than 50 wt% of the synthetic fibers in the pre-filter may be fine staple fibers, less than 40 wt% of the synthetic fibers in the pre-filter may be fine staple fibers, less than 30 wt% of the synthetic fibers in the pre-filter may be fine staple fibers, less than 20 wt% of the synthetic fibers in the pre-filter may be fine staple fibers, less than 18 wt% of the synthetic fibers in the pre-filter may be fine staple fibers, less than 16 wt% of the synthetic fibers in the pre-filter may be fine staple fibers, less than 14 wt% of the synthetic fibers in the pre-filter may be fine staple fibers, less than 12 wt% of the synthetic fibers in the pre-filter may be fine staple fibers, less than 10 wt% of the synthetic fibers in the pre-filter may be fine staple fibers, or less than 8 wt% of the synthetic fibers in the pre-filter may be fine staple fibers. Combinations of the above-referenced ranges are also possible (e.g., at least 8 wt% and less than 20 wt% of the synthetic fibers in the pre-filter may be fine staple fibers). Other ranges are also possible.

In certain embodiments in which the pre-filter comprises at least one region, the first region (e.g., the top region) of the pre-filter may comprise a relatively low amount of fine staple fibers. In certain embodiments, the pre-filter may comprise a first region and less than 10 wt% of the synthetic fibers in the first region may be fine staple fibers, less than 7.5 wt% of the synthetic fibers in the first region may be fine staple fibers, less than 5 wt% of the synthetic fibers in the first region may be fine staple fibers, or less than 2.5 wt% of the synthetic fibers in the first region may be fine staple fibers. In certain embodiments, the pre-filter may comprise a first region and at least 2.5 wt% of the synthetic fibers in the first region may be fine staple fibers, at least 5 wt% of the synthetic fibers in the first region may be fine staple fibers, or at least 7.5 wt% of the synthetic fibers in the first region may be fine staple fibers. Combinations of the above-referenced ranges are also possible (e.g., at least 2.5 wt% and less than 10 wt% of the synthetic fibers in the first region may be fine staple fibers). Other ranges are also possible.

In certain embodiments in which the pre-filter comprises at least two regions, the second region (e.g., the bottom region) of the pre-filter may comprise a relatively low amount of fine staple fibers. In certain embodiments, the pre-filter may comprise a second region and less than 50 wt% of the synthetic fibers in the second region may be fine staple fibers, less than 40 wt% of the synthetic fibers in the second region may be fine staple fibers, less than 30 wt% of the synthetic fibers in the second region may be fine staple fibers, less than 20 wt% of the synthetic fibers in the second region may be fine staple fibers, or less than 10 wt% of the synthetic fibers in the second region may be fine staple fibers. In certain embodiments, the pre-filter may comprise a second region and at least 5 wt% of the synthetic fibers in the second region may be fine staple fibers, at least 10 wt% of the synthetic fibers in the second region may be fine staple fibers, at least 20 wt% of the synthetic fibers in the second region may be fine staple fibers, at least 30 wt% of the synthetic fibers in the second region may be fine staple fibers, or at least 40 wt% of the synthetic fibers in the second region may be fine staple fibers. Combinations of the above-referenced ranges are also possible (e.g., at least 5 wt% and less than 50 wt% of the synthetic fibers in the second region may be fine staple fibers). Other ranges are also possible.

As described above, the pre-filter may comprise synthetic fibers which are fibrillated fibers. In some embodiments, the fibrillated fibers comprise cellulose fibers, such as modified cellulose fibers. In some embodiments, the fibrillated fibers may comprise lyocell fibers.

The fibrillated fibers may have any suitable fibrillation level. The level of fibrillation may be measured according to any number of suitable methods. For example, the level of fibrillation of the fibrillated fibers can be measured according to a Canadian Standard Freeness (CSF) test, specified by TAPPI test method T 227 om-09 (2009) Freeness of pulp. The test can provide an average CSF value as a measure of the level of fibrillation. In some embodiments, the average CSF value is at least 100 CSF, at least 140 CSF, at least 180 CSF, at least 220 CSF, at least 260 CSF, at least 300 CSF, at least 340 CSF, or at least 380 CSF. In some embodiments, the average CSF value is less than 440 CSF, less than 380 CSF, less than 340 CSF, less than 300 CSF, less than 260 CSF, less than 220 CSF, or less than 180 CSF. Combinations of the above-referenced ranges are also possible (e.g., at least 140 CSF and less than 440 CSF). Other ranges are also possible.

In some embodiments, the pre-filter may comprise a defined percentage of fibrillated fibers. In some embodiments, at least 1 wt% of the synthetic fibers in the pre-filter may be fibrillated fibers, at least 2 wt% of the synthetic fibers in the pre-filter may be fibrillated fibers, at least 3 wt% of the synthetic fibers in the pre-filter may be fibrillated fibers, at least 4 wt% of the synthetic fibers in the pre-filter may be fibrillated fibers, at least 5 wt% of the synthetic fibers in the pre-filter may be fibrillated fibers, at least 6 wt% of the synthetic fibers in the pre-filter may be fibrillated fibers, at least 7 wt% of the synthetic fibers in the pre-filter may be fibrillated fibers, at least 8 wt% of the synthetic fibers in the pre-filter may be fibrillated fibers, at least 9 wt% of the synthetic fibers in the pre-filter may be fibrillated fibers, at least 10 wt% of the synthetic fibers in the pre-filter may be fibrillated fibers, at least 15 wt% of the synthetic fibers in the pre-filter may be fibrillated fibers, or at least 20 wt% of the synthetic fibers in the pre-filter may be fibrillated fibers. In some embodiments, less than 25 wt% of the synthetic fibers in the pre-filter may be fibrillated fibers, less than 20 wt% of the synthetic fibers in the pre-filter may be fibrillated fibers, less than 15 wt% of the synthetic fibers in the pre-filter may be fibrillated fibers, less than 10 wt% of the synthetic fibers in the pre-filter may be fibrillated fibers, less than 9 wt% of the synthetic fibers in the pre-filter may be fibrillated fibers, less than 8 wt% of the synthetic fibers in the pre-filter may be fibrillated fibers, less than 7 wt% of the synthetic fibers in the pre-filter may be fibrillated fibers, less than 6 wt% of the synthetic fibers in the pre-filter may be fibrillated fibers, less than 5 wt% of the synthetic fibers in the pre-filter may be fibrillated fibers, less than 4 wt% of the synthetic fibers in the pre-filter may be fibrillated fibers, less than 3 wt% of the synthetic fibers in the pre-filter may be fibrillated fibers, less than 2 wt% of the synthetic fibers in the pre-filter may be fibrillated fibers, or less than 1 wt% of the synthetic fibers in the pre-filter may be fibrillated fibers. Combinations of the above-referenced ranges are also possible (e.g., at least 1 wt% and less than 8 wt% of the synthetic fibers in the pre-filter may be fibrillated fibers). Other ranges are also possible.

In certain embodiments in which the pre-filter comprises at least one region, the first region (e.g., the top region) of the pre-filter may comprise a relatively low amount of fibrillated fibers. In certain embodiments, the pre-filter may comprise a first region and less than 10 wt% of the synthetic fibers in the first region may be fibrillated fibers, less than 7.5 wt% of the synthetic fibers in the first region may be fibrillated fibers, less than 5 wt% of the synthetic fibers in the first region may be fibrillated fibers, or less than 2.5 wt% of the synthetic fibers in the first region may be fibrillated fibers. In certain embodiments, the pre-filter may comprise a first region and at least 0 wt% of the synthetic fibers in the first region may be fibrillated fibers, at least 2.5 wt% of the synthetic fibers in the first region may be fibrillated fibers, at least 5 wt% of the synthetic fibers in the first region may be fibrillated fibers, or at least 7.5 wt% of the synthetic fibers in the first region may be fibrillated fibers. Combinations of the above-referenced ranges are also possible (e.g., at least 0 wt% and less than 10 wt% of the synthetic fibers in the first region may be fibrillated fibers). Other ranges are also possible.

In certain embodiments in which the pre-filter comprises at least two regions, the second region (e.g., the bottom region) of the pre-filter may comprise a relatively low amount of fibrillated fibers. In certain embodiments, the pre-filter may comprise a second region and less than 20 wt% of the synthetic fibers in the second region may be fibrillated fibers, less than 15 wt% of the synthetic fibers in the second region may be fibrillated fibers, less than 10 wt% of the synthetic fibers in the second region may be fibrillated fibers, or less than 5 wt% of the synthetic fibers in the second region may be fibrillated fibers. In certain embodiments, the pre-filter may comprise a second region and at least 1 wt% of the synthetic fibers in the second region may be fibrillated fibers, at least 5 wt% of the synthetic fibers in the second region may be fibrillated fibers, at least 10 wt% of the synthetic fibers in the second region may be fibrillated fibers, or at least 15 wt% of the synthetic fibers in the second region may be fibrillated fibers. Combinations of the above-referenced ranges are also possible (e.g., at least 1 wt% and less than 20 wt% of the synthetic fibers in the second region may be fibrillated fibers). Other ranges are also possible.

In some embodiments, additional synthetic fibers which are not coarse staple fibers, fine staple fibers, or fibrillated fibers as described above, may also be present in the pre-filter. Non-limiting examples of such fibers include bicomponent fibers and poly(vinyl alcohol fibers). In some embodiments such additional synthetic fibers may make up less than 20 wt% of the synthetic fibers in the pre-filter, less than 10 wt% of the synthetic fibers in pre-filter, less than 5 wt% of the synthetic fibers in the pre-filter, less than 2.5 wt% of the synthetic fibers in the pre-filter, or less than 1 wt% of the synthetic fibers in the pre-filter. In some embodiments, such additional fibers may make up at least 0 wt% of the synthetic fibers in the pre-filter, at least 1 wt% of the synthetic fibers in the pre-filter, at least 2.5 wt% of the synthetic fibers in the pre-filter, at least 5 wt% of the synthetic fibers in the pre-filter, or at least 10 wt% of the synthetic fibers in the pre-filter. Other ranges are also possible (e.g., the additional fibers may make up at least 0 wt% of the synthetic fibers in the pre-filter and less than 10 wt% of the synthetic fibers in the pre-filter). Other ranges are also possible.

In some embodiments, the pre-filter may comprise non-synthetic fibers. For example, in some embodiments the pre-filter may comprise glass fibers and/or cellulose fibers.

In accordance with some embodiments, the pre-filter may comprise a relatively low weight percentage of non-synthetic fibers with respect to the total weight of fibers in the pre-filter. In certain embodiments, the pre-filter may comprise a weight percentage of non-synthetic fibers that is greater than or equal to 1 wt%, greater than or equal to 5 wt%, greater than or equal to 10 wt%, greater than or equal to 25 wt %, greater than or equal to 30 wt%, greater than or equal to 40 wt%, greater than or equal to 50 wt%. In some embodiments, the pre-filter may comprise a weight percentage of non-synthetic fibers that is less than or equal to 50 wt %, less than or equal to 40 wt%, less than or equal to 30 wt%, less than or equal to 25 wt%, less than or equal to 10 wt%, or less than or equal to 5 wt%. Combinations of the above-referenced ranges are also possible (e.g., greater than or equal to 1 wt% and less than or equal to 50 wt%, greater than or equal to 5 wt% and less than or equal to 25 wt%, or greater than or equal to 1 wt% and less than or equal to 5 wt%). Other ranges are also possible.

In some embodiments, the fibers within the pre-filter may be characterized as having a length. The average length of these fibers can be any suitable value. In certain embodiments, the fibers within the pre-filter may have an average length of greater than or equal to 3 mm, greater than or equal to 5 mm, greater than or equal to 7 mm, greater than or equal to 9 mm, greater than or equal to 11 mm, or greater than or equal to 13 mm. In some embodiments, the fibers within the pre-filter may have an average length of less than or equal to 15 mm, less than or equal to 13 mm, less than or equal to 11 mm, less than or equal to 9 mm, less than or equal to 7 mm, or less than or equal to 5 mm. Combinations of the above-referenced ranges are also possible (e.g., greater than or equal to 3 mm and less than or equal to 15 mm or greater than or equal to 3 mm and less than or equal to 7 mm). Other ranges are also possible.

In some embodiments, the fibers within the pre-filter may be characterized as having a diameter. In general, individual fiber diameters may be measured by microscopy, for example scanning electron microscopy (SEM), and statistics regarding fiber diameter such as average fiber diameter, and fiber diameter standard deviation may be determined by performing appropriate statistical techniques on the measured fiber diameters. In certain embodiments, fibers within the pre-filter may have an average diameter of greater than or equal to 1 micron, greater than or equal to 2 microns, greater than or equal to 4 microns, greater than or equal to 8 microns, greater than or equal to 12 microns, greater than or equal to 16 microns, or greater than or equal to 20 microns. In some embodiments, fibers within the pre-filter may have an average diameter of less than or equal to 20 microns, less than or equal to 16 microns, less than or equal to 12 microns, less than or equal to 8 microns, less than or equal to 4 microns, less than or equal to 2 microns, or less than or equal to 1.5 microns. Combinations of the above-referenced ranges are also possible. Other ranges are also possible.

As described above, the pre-filter may comprise more than one region. In accordance with certain such embodiments, each region within the pre-filter may independently comprise fibers with different diameters, average diameters, and/or diameter standard deviations. The fibers within the first region (e.g., top region) of the pre-filter may have any suitable average diameter. For example, in some embodiments, the fibers within the first region of the pre-filter may have an average diameter of greater than or equal to 1 micron, greater than or equal to 3 microns, greater than or equal to 5 microns, greater than or equal to 7 microns, greater than or equal to 10 microns, greater than or equal to 12 microns, greater than or equal to 14 microns, or greater than or equal to 16 microns. In certain embodiments, the fibers within the first region of the pre-filter may have an average diameter of less than or equal to 18 microns, less than or equal to 16 microns, less than or equal to 14 microns, less than or equal to 12 microns, less than or equal to 10 microns, less than or equal to 7 microns, less than or equal to 5 microns, or less than or equal to 3 microns. Combinations of the above-referenced ranges are also possible (e.g., greater than or equal to 3 microns and less than or equal to 18 microns or greater than or equal to 5 microns and less than or equal to 12 microns). Other ranges are also possible.

In accordance with certain embodiments where the pre-filter comprises at least a first region, the distribution of fiber diameters within the first region of the pre-filter may be characterized by a standard deviation. In certain embodiments, the first region may have a fiber diameter standard deviation of greater than or equal to 1micron, greater than or equal to 1.5 microns, greater than or equal to 2 microns, greater than or equal to 2.5 microns, greater than or equal to 3 microns, greater than or equal to 3.5 microns, greater than or equal to 4 microns, greater than or equal to 4.5 microns, greater than or equal to 5 microns, or greater than or equal to 4.5 microns. According to some embodiments, the first region may have a fiber diameter standard deviation of less than or equal to 6 microns, less than or equal to 5.5 microns, less than or equal to 5 microns, less than or equal to 4.5 microns, less than or equal to 4 microns, less than or equal to 3.5 microns, less than or equal to 3 microns, less than or equal to 3 microns, less than or equal to 2.5 microns, less than or equal to 2 microns, or less than or equal to 1.5 microns. Combinations of the above-referenced ranges are also possible (e.g., greater than or equal to 1micron and less than or equal to 6 microns and greater than or equal to 1.5 microns and less than or equal to 4.5 microns).

In some embodiments, the pre-filter may comprise at least a first region and the fibers in the first region of the pre-filter may comprise diameters that vary between 0.4 microns and 15 microns.

In certain embodiments, the pre-filter may comprise at least one region and the first region (e.g., a top region) may comprise coarse staple fibers. In such embodiments, the coarse staple fibers in the first region may be of any suitable average diameter. In certain embodiments, the pre-filter may comprise at least one region and the coarse staple fibers within the first region may have an average diameter of at least 3 microns, at least 5 microns, at least 8 microns, at least 10 microns, at least 12 microns, at least 14 microns, or at least 16 microns. In certain embodiments, the pre-filter may comprise at least one region and the coarse staple fibers within the first region may have an average diameter of less than 18 microns, less than 16 microns, less than 14 microns, less than 12 microns, less than 10 microns, less than 8 microns, or less than 5 microns. Combinations of the above-referenced ranges are also possible (e.g., at least 3 microns and less than 18 microns, or at least 5 microns and less than 12 microns). Other ranges are also possible.

In certain embodiments, the pre-filter may comprise at least one region and the first region (e.g., a top region) may comprise fine staple fibers. In such embodiments, the fine staple fibers in the first region may be of any suitable average diameter. In certain embodiments, the fine staple fibers within the first region may have an average diameter of at least 1 micron, at least 1.25 microns, at least 1.5 microns, or at least 1.75 microns. In certain embodiments, the fine staple fibers within the first region may have an average diameter of less than 2 microns, less than 1.75 microns, less than 1.5 microns, or less than 1.25 microns. Combinations of the above-referenced ranges are also possible (e.g., at least 1 micron and less than 2 microns). Other ranges are also possible.

In some embodiments, the pre-filter may comprise a second region and the fibers within the second region of the pre-filter may also comprise one or more of an average fiber diameter, and a fiber diameter standard deviation. In general, individual fiber diameters may be measured by microscopy, for example scanning electron microscopy (SEM), and statistics regarding fiber diameter such as average fiber diameter, median fiber diameter, and fiber diameter standard deviation may be determined by performing appropriate statistical techniques on the measured fiber diameters. According to certain embodiments, the fibers within the second region of the pre-filter may have an average diameter of greater than or equal to 1 micron, greater than or equal to 2 microns, greater than or equal to 2.5 microns, greater than or equal to 5 microns, greater than or equal to 8 microns, or greater than or equal to 10 microns. In certain embodiments, the fibers within the second region of the pre-filter may have an average diameter of less than or equal to 12 microns, less than or equal to 10 microns, less than or equal to 8 microns, less than or equal to 5 microns, less than or equal to 2.5 microns, or less than or equal to 2 microns. Combinations of the above-referenced ranges are also possible (e.g., greater than or equal to 1 micron and less than or equal to 12 microns, greater than or equal to 2.5 microns and less than or equal to 8 microns, or greater than or equal to 2 microns and less than or equal to 6 microns). Other ranges are also possible. In some embodiments, the fibers within the second region (e.g., bottom region) have a smaller average diameter than the fibers within the first region (e.g., top region).

In accordance with certain embodiments where the pre-filter comprises at least a second region, the distribution of fiber diameters within the second region of the pre-filter may be characterized by a standard deviation. In certain embodiments, the second region may have a fiber diameter standard deviation of greater than or equal to 1 micron, greater than or equal to 1.5 microns, greater than or equal to 2 microns, greater than or equal to 2.5 microns, greater than or equal to 3 microns, greater than or equal to 3.5 microns, greater than or equal to 4 microns, greater than or equal to 4.5 microns, greater than or equal to 5 microns, or greater than or equal to 4.5 microns. According to some embodiments, the second region may have a fiber diameter standard deviation of less than or equal to 6 microns, less than or equal to 5.5 microns, less than or equal to 5 microns, less than or equal to 4.5 microns, less than or equal to 4 microns, less than or equal to 3.5 microns, less than or equal to 3 microns, less than or equal to 3 microns, less than or equal to 2.5 microns, less than or equal to 2 microns, or less than or equal to 1.5 microns. Combinations of the above-referenced ranges are also possible (e.g., greater than or equal to 1 micron and less than or equal to 6 microns and greater than or equal to 1.5 microns and less than or equal to 4.5 microns).

In some embodiments, the pre-filter may comprise at least a second region and fibers in the second region of the pre-filter may comprise diameters that vary between 0.4 microns and 15 microns.

In certain embodiments, the pre-filter may comprise at least two regions and the second region (e.g., a bottom region) may comprise coarse staple fibers. In such embodiments, the coarse staple fibers in the second region may be of any suitable average diameter. In some embodiments, the coarse staple fibers within the second region may have an average diameter of at least 1 micron, at least 2.5 microns, at least 4 microns, at least 6 microns, at least 8 microns, or at least 10 microns. In some embodiments, the coarse staple fibers within the second region may have an average diameter of less than 12 microns, less than 10 microns, less than 8 microns, less than 6 microns, less than 4 microns, or less than 2.5 microns. Combinations of the above-referenced ranges are also possible (e.g., at least 1 micron and less than 12 microns, or at least 2.5 microns and less than 8 microns). Other ranges are also possible.

In certain embodiments, the pre-filter may comprise at least two regions and the second region (e.g., a bottom region) may comprise fine staple fibers. In such embodiments, the fine staple fibers in the second region may be of any suitable average diameter. In certain embodiments, the fine staple fibers within the second region (e.g., the bottom region) may have an average diameter of at least 1 micron, at least 1.25 microns, at least 1.5 microns, or at least 1.75 microns. In certain embodiments, the fine staple fibers within the second region may have an average diameter of less than 2 microns, less than 1.75 microns, less than 1.5 microns, or less than 1.25 microns. Combinations of the above-referenced ranges are also possible (e.g., at least 1 micron and less than 2 microns). Other ranges are also possible.

In accordance with certain embodiments, the pre-filter may comprise a binder and/or a resin. As used herein, binders may be added to the fiber furnish during pre-filter fabrication, while resins are added to the pre-filter structure after it has been fabricated. In some embodiments, the binder may comprise an acrylic binder. In some embodiments, the resin may comprise a phenolic resin, epoxy resin, and/or acrylic resin. The resin and/or binder may together comprise any suitable weight percent of the pre-filter. According to some embodiments, the resin and/or binder may together comprise greater than or equal to 0 wt% of the pre-filter, greater than or equal to 1 wt% of the pre-filter, greater than or equal to 2 wt% of the pre-filter, greater than or equal to 5 wt% of the pre-filter, greater than or equal to 6 wt% of the pre-filter, greater than or equal to 10 wt% of the pre-filter, greater than or equal to 15 wt% of the pre-filter, greater than or equal to 20 wt% of the pre-filter, or greater than or equal to 25 wt% of the pre-filter. In certain embodiments, the resin and/or binder may together comprise less than or equal to 30 wt% of the pre-filter, less than or equal to 25 wt% of the pre-filter, less than or equal to 20 wt% of the pre-filter, less than or equal to 15 wt% of the pre-filter, less than or equal to 10 wt% of the pre-filter, less than or equal to 6 wt% of the pre-filter, less than or equal to 5 wt% of the pre-filter, less than or equal to 2 wt% of the pre-filter, or less than or equal to 1 wt% of the pre-filter. Combinations of the above-referenced ranges are also possible (e.g., greater than or equal to 0 wt% and less than or equal to 30 wt% or greater than or equal to 1 wt% and less than or equal to 6 wt%). It should be understood that the binder and/or resin making up any given wt% of the pre-filter may be present in any proportion with respect to each other (e.g., together the resin and binder make up 10 wt% of the pre-filter such that the resin makes up 0 wt% of the pre-filter and the binder makes up 10 wt% of the pre-filter; together the resin and binder make up 10 wt% of the pre-filter such that the resin makes up 10 wt% of the pre-filter and the binder makes up 0 wt% of the pre-filter; or together the resin and binder make up 10 wt% of the pre-filter such that the resin makes up 5 wt% of the pre-filter and the binder makes up 5 wt% of the pre-filter, etc.). Other ranges are also possible. In certain embodiments, the binder and/or resin may enhance the mechanical properties of the fiber web and/or provide other performance advantages.

According to certain embodiments, the pre-filter may comprise one or more additives. Non-limiting examples of suitable additives include conductive additives and/or particles. The additives may comprise any suitable weight percent of total weight of the pre-filter. For example, in some embodiments, the additives may comprise greater than or equal to 0 wt% of the pre-filter, greater than or equal to 2.5 wt% of the pre-filter, greater than or equal to 5 wt% of the pre-filter, greater than or equal to 7.5 wt% of the pre-filter, greater than or equal to 10 wt% of the pre-filter, greater than or equal to 12.5 wt% of the pre-filter, greater than or equal to 15 wt% of the pre-filter, or greater than or equal to 17.5 wt% of the pre-filter. In certain embodiments, the additives may comprise less than or equal to 20 wt% of the pre-filter, less than or equal to 17.5 wt% of the pre-filter, less than or equal to 15 wt% of the pre-filter, less than or equal to 12.5 wt% of the pre-filter, less than or equal to 10 wt% of the pre-filter, less than or equal to 7.5 wt% of the pre-filter, less than or equal to 5 wt% of the pre-filter, or less than or equal to 2.5 wt% of the pre-filter. Combinations of the above-referenced ranges are also possible (e.g., greater than or equal to 0 wt% of the pre-filter and less than or equal to 20 wt% of the pre-filter or greater than or equal to 0 wt% of the pre-filter and less than or equal to 10 wt% of the pre-filter). Other ranges are also possible.

The pre-filter as a whole and any region within the pre-filter may have any suitable thickness. Thickness of the pre-filter as a whole, as referred to herein, is determined according to TAPPI T411 using an appropriate caliper gauge (e.g., a Model 200-A electronic microgauge manufactured by Emveco, tested at 1.5 psi).

In certain embodiments, the thickness of the pre-filter as a whole is greater than or equal to 0.15 mm, greater than or equal to 0.3 mm, greater than or equal to 0.4 mm, greater than or equal to 0.8 mm, greater than or equal to 1.2 mm, greater than or equal to 1.6 mm, or greater than or equal to 2 mm. In certain embodiments, the thickness of the pre-filter as a whole is less than or equal to 2.4 mm, less than or equal to 2 mm, less than or equal to 1.6 mm, less than or equal to 1.2 mm, less than or equal to 0.8 mm, less than or equal to 0.4 mm, or less than or equal to 0.3 mm. Combinations of the above-referenced ranges are also possible (e.g., greater than or equal to 0.3 mm and less than or equal to 2.4 mm, greater than or equal to 0.4 mm and less than or equal to 2 mm, or greater than or equal to 0.4 mm and less than or equal to 1.6 mm). Other ranges are also possible.

In some embodiments, the thickness of each region (e.g., first and second regions) of the pre-filter may independently be greater than or equal to 0.15 mm, greater than or equal to 0.2 mm, greater than or equal to 0.4 mm, greater than or equal to 0.6 mm, greater than or equal to 0.8 mm, or greater than or equal to 1 mm. In some embodiments, the thickness of each region (e.g., first and second regions) of the pre-filter is less than or equal to 1.2 mm, less than or equal to 1 mm, less than or equal to 0.8 mm, less than or equal to 0.6 mm, less than or equal to 0.4 mm, or less than or equal to 0.2 mm. Combinations of the above-referenced ranges are also possible (e.g., greater than or equal to 0.15 mm and less than or equal to 1.2 mm, greater than or equal to 0.2 mm and less than or equal to 1 mm, or greater than or equal to 0.2 mm and less than or equal to 0.8 mm). Other ranges are also possible.

The basis weight of the pre-filter as a whole and each region within the pre-filter may have any suitable value. As determined herein, the basis weight of the pre-filter as a whole is measured according to the Technical Association of the Pulp and Paper Industry (TAPPI) Standard T410. The values are expressed in grams per square meter. Basis weight can generally be measured on a laboratory balance that is accurate to 0.1 grams.

In some embodiments, the basis weight for the pre-filter as a whole may be greater than or equal to 20 g/m², greater than or equal to 50 g/m², greater than or equal to 100 g/m², or greater than or equal to 150 g/m². In some embodiments, the basis weight of the pre-filter may be less than or equal to 200 g/m², less than or equal to 150 g/m², less than or equal to 100 g/m², or less than or equal to 50 g/m². Combinations of the above-referenced ranges are also possible (e.g., greater than or equal to 20 g/m² and less than or equal to 200 g/m²). Other ranges are also possible.

In certain embodiments, the basis weight of each region (e.g., first and second regions) may independently be greater than or equal to 10 g/m², greater than or equal to 25 g/m², greater than or equal to 50 g/m², or greater than or equal to 75 g/m². In some embodiments, the basis weight of each region (e.g., first and second regions) may independently be less than or equal to 100 g/m², less than or equal to 75 g/m², less than or equal to 50 g/m², or less than or equal to 25 g/m². Combinations of the above-referenced ranges are also possible (e.g., greater than or equal to 10 g/m² and less than or equal to 100 g/m²). Other ranges are also possible.

In embodiments which comprise a pre-filter with at least two regions, the ratio of the basis weight of one (e.g., first) region of the pre-filter to another (e.g., second) region of the pre-filter may be any suitable value. In some embodiments, this ratio may be greater than or equal to 0.5, greater than or equal to 0.6, greater than or equal to 0.7, greater than or equal to 0.8, greater than or equal to1, greater than or equal to 1.25, greater than or equal to 1.5, or greater than or equal to 1.75. In certain embodiments, this ratio may be less than or equal to 2, less than or equal to 1.75, less than or equal to 1.5, less than or equal to 1.25, less than or equal to 1, less than or equal to 0.8, less than or equal to 0.7, less than or equal to 0.6, or less than or equal to 0.5. Combinations of the above-referenced ranges are also possible (e.g., greater than or equal to 0.5 and less than or equal to 2, greater than or equal to 0.5 and less than or equal to 1, or greater than or equal to 1 and less than or equal to 2). Other ranges are also possible.

In certain embodiments, the pre-filter has certain air permeabilities. As determined herein, the permeability is measured according to TAPPI Method T251. The permeability of a filter media is an inverse function of flow resistance and can be measured with a Frazier Permeability Tester. The Frazier Permeability Tester measures the volume of air per unit of time that passes through a unit area of sample at a fixed differential pressure across the sample. Permeability can be expressed in cubic feet per minute per square foot at a 0.5 inch water differential (1CFM = 8.11/m²/s at 200 Pa)

. In accordance with some embodiments, the pre-filter may have an air permeability of greater than or equal to 17 cfm, greater than or equal to 20 cfm, greater than or equal to 30 cfm, greater than or equal to 40 cfm, greater than or equal to 50 cfm, greater than or equal to 60 cfm, or greater than or equal to 70 cfm. In certain embodiments, the pre-filter may have an air permeability of less than or equal to 80 cfm, less than or equal to 70 cfm, less than or equal to 50 cfm, less than or equal to 40 cfm, less than or equal to 30 cfm, or less than or equal to 20 cfm. Combinations of the above-referenced ranges are also possible (e.g., greater than or equal to 17 cfm and less than or equal to 80 cfm or greater than or equal to 20 cfm and less than or equal to 30 cfm). Other ranges are also possible.

In accordance with certain embodiments, the pores within the pre-filter may be characterized by statistical parameters, such as a maximum, minimum, mean flow pore size, and standard deviation. These parameters may be determined by using a Capillary Flow Porometer manufactured by Porous Materials, Inc. in accordance with the ASTM F316-03 standard. According to some embodiments, the pores within the pre-filter may have a maximum pore size of greater than or equal to 24 microns, greater than or equal to 28 microns, greater than or equal to 32 microns, greater than or equal to 35 microns, greater than or equal to 40 microns, greater than or equal to 45 microns, or greater than or equal to 50 microns. In certain embodiments, the pores within the pre-filter may have a maximum pore size of less than or equal to 55 microns, less than or equal to 50 microns, less than or equal to 45 microns, less than or equal to 40 microns, less than or equal to 35 microns, less than or equal to 32 microns, or less than or equal to 28 microns. Combinations of the above-referenced ranges are also possible (e.g., greater than or equal to 24 microns and less than or equal to 55 microns or greater than or equal to 28 microns and less than or equal to 45 microns). Other ranges are also possible.

According to some embodiments, the pores within the pre-filter may have a minimum pore size on the order of microns. For example, in certain embodiments, the pre-filter may have a minimum pore size of greater than or equal to 1 micron, greater than or equal to 2 microns, greater than or equal to 3 microns, greater than or equal to 4 microns, greater than or equal to 5 microns, greater than or equal to 6 microns, or greater than or equal to 7 microns. According to certain embodiments, the pores within the pre-filter may have a minimum pore size of less than or equal to 8 microns, less than or equal to 7 microns, less than or equal to 6 microns, less than or equal to 5 microns, less than or equal to 4 microns, less than or equal to 3 microns, or less than or equal to 2 microns. Combinations of the above-referenced ranges are also possible (e.g., greater than or equal to 1 micron and less than or equal to 8 microns or greater than or equal to 2 microns and less than or equal to 6 microns). Other ranges are also possible.

The pre-filter may have any suitable mean flow pore size. In accordance with certain embodiments, the pre-filter may have a mean flow pore size of greater than or equal to 12 um, greater than or equal to 15 um, greater than or equal to 18 um, greater than or equal to 22 um, or greater than or equal to 25 um. In some embodiments, the pre-filter may have a mean flow pore size of less than or equal to 28 um, less than or equal to 25 um, less than or equal to 22 um, less than or equal to 18 um, or less than or equal to 15 um. Combinations of the above-referenced ranges are also possible (e.g., greater than or equal to 12 um and less than or equal to 28 um or greater than or equal to 15 um and less than or equal to 24 um). Other ranges are also possible.

In some embodiments, the pores within the pre-filter may have a standard deviation of greater than or equal to 2 microns, greater than or equal to 3 microns, greater than or equal to 4 microns, greater than or equal to 5 microns, greater than or equal to 6 microns, or greater than or equal to 7 microns. In certain embodiments, the pores within the pre-filter may have a standard deviation of less than or equal to 8 microns, less than or equal to 7 microns, less than or equal to 6 microns, less than or equal to 5 microns, less than or equal to 4 microns, or less than or equal to 3 microns. Combinations of the above-referenced ranges are also possible (e.g., greater than or equal to 2 microns and less than or equal to 8 microns or greater than or equal to 5 microns and less than or equal to 3 microns). Other ranges are also possible.

According to certain embodiments, the pre-filter may comprise a solidity. In some embodiments, the solidity is greater than or equal to 5%, greater than or equal to 7.5%, greater than or equal to 10%, or greater than or equal to 12.5%. In accordance with certain embodiments, the solidity is less than or equal to 15%, less than or equal to 12.5%, less than or equal to 10%, or less than or equal to 7.5%. Combinations of the above-referenced ranges are also possible (e.g., greater than or equal to 5% and less than or equal to 15%, or greater than or equal to 5% and less than or equal to 12.5%). Other ranges are also possible. Solidity generally refers to the percentage of volume of solids with respect to the total volume of the layer.

In some embodiments, the pre-filter may comprise a specific surface area. The specific surface area is defined as the surface area of the pre-filter divided by the mass of the pre-filter. The specific surface area is measured through use of a standard BET surface area measurement technique. The BET surface area is measured according to section 10 of Battery Council International Standard BCIS-03A, "Recommended Battery Materials Specifications Valve Regulated Recombinant Batteries", section 10 being "Standard Test Method for Surface Area of Recombinant Battery Separator Mat". Following this technique, the BET surface area is measured via adsorption analysis using a BET surface analyzer (e.g., Micromeritics Gemini III 2375 Surface Area Analyzer) with nitrogen gas; the sample amount is between 0.5 and 0.6 grams in, e.g., a 3/4" tube; and, the sample is allowed to degas at 75 degrees C for a minimum of 3 hours. In certain embodiments, the specific surface area of the pre-filter may be greater than or equal to 0.2 m²/g, greater than or equal to 0.25 m²/g, greater than or equal to 0.3 m²/g, greater than or equal to 0.35 m²/g, greater than or equal to 0.4 m²/g, greater than or equal to 0.45 m²/g, greater than or equal to 0.5 m²/g, greater than or equal to 0.55 m²/g, greater than or equal to 0.6 m²/g, greater than or equal to 0.65 m²/g, greater than or equal to 0.7 m²/g, or greater than or equal to 0.75 m²/g.

According to some embodiments, the specific surface area of the pre-filter may be less than or equal to 0.8 m²/g, less than or equal to 0.75 m²/g, less than or equal to 0.7 m²/g, less than or equal to 0.65 m²/g, less than or equal to 0.6 m²/g, less than or equal to 0.55 m²/g, less than or equal to 0.5 m²/g, less than or equal to 0.45 m²/g, less than or equal to 0.4 m²/g, less than or equal to 0.35 m²/g, less than or equal to 0.3 m²/g, or less than or equal to 0.25 m²/g. Combinations of the above-referenced ranges are also possible (e.g., greater than or equal to 0.2 m²/g and less than or equal to 0.8 m²/g or greater than or equal to 0.25 m²/g and less than or equal to 0.65 m²/g). Other ranges are also possible.

In certain embodiments, the filter media may only comprise what has been described herein as the pre-filter without containing any additional layers. Such a filter media may be advantageous for certain applications, such as air filtration and/or engine air intake. A filter media that comprises only the described pre-filter may have any of the pre-filter physical or chemical properties described above.

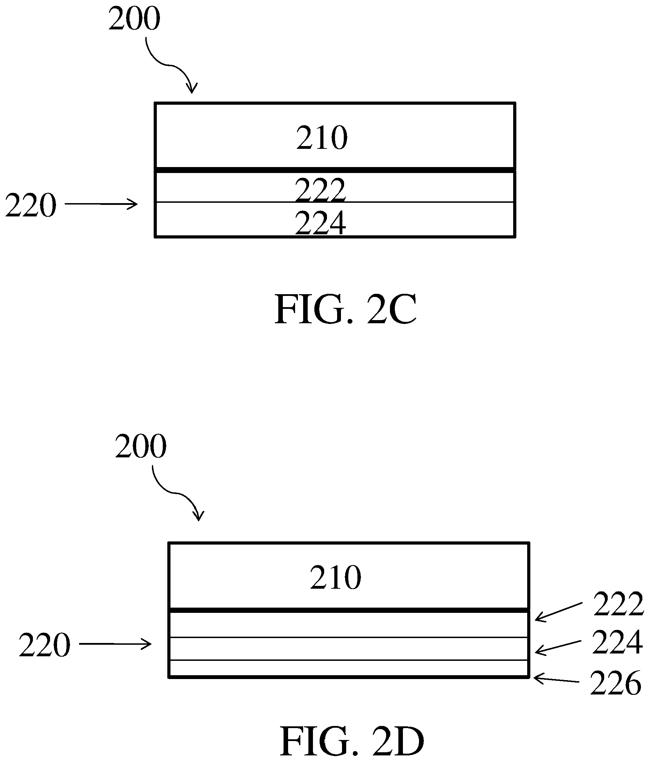

As described above, the filter media may comprise a second layer which is a main filter. FIG. 2C shows a non-limiting example of filter media 200 comprising layer 220 which is the main filter and comprises first layer 222 and second layer 224. In some embodiments, the filter media may comprise a layer which is a main filter and the main filter may comprise at least three layers. FIG. 2D shows a non-limiting example of filter media 200 comprising layer 210 and layer 220 which is the main filter. Here, the main filter further comprises first layer 222, second layer 224, and third layer 226. It should also be understood that in some embodiments a main filter may comprise only one layer; and, in other embodiments, more than three layers, such as four layers, five layers, or even more layers.

In some embodiments, fluid (e.g., hydraulic fluid, air, etc.) may flow through the main filter after passing through the pre-filter and so it may be advantageous for the main filter to be capable of capturing dust particles that are not removed by the pre-filter. Certain chemical and physical properties which enable the main filter to perform in an advantageous manner are described below in further detail.

The presence of more than one layer within the main filter may allow such a main filter to achieve a higher dust holding capacity than otherwise identical main filters which comprise exactly one layer. According to certain embodiments, two or more layers within the main filter may be disposed with respect to each other in an advantageous manner. In some embodiments, one layer may be oriented with respect to another layer so that there is less variation in the structure and properties of the main filter as a whole. For example, the air permeability and the beta efficiency may be more uniform across the cross-section of the filter media. In some embodiments, two or more layers with different properties may be adjacent to each other such that a gradient structure is achieved.

References to properties of the main filter herein may refer to properties of a main filter comprising only one region, of the main filter as a whole when the main filter comprises more than one region, and/or to properties of any region within a main filter.

The main filter may comprise any suitable fibers. In some embodiments, the main filter may comprise synthetic fibers and/or blends which comprise synthetic fibers. Non-limiting examples of suitable synthetic fibers include polyesters such as poly(butylene terephthalate) and poly(butylene naphthalate); polyamides such as nylons; poly(phenylene sulfides); polyacrylics; polyolefins such as polyethylene and polypropylene; polycarbonates; thermoplastic polyurethanes; polymers which comprise fluorine atoms such as poly(vinylidene difluoride) (PVDF) and poly(tetrafluoroethylene) (PTFE); poly(vinyl alcohol) (PVA); polystyrene; and regenerated cellulose (e.g., rayon). In some embodiments, the synthetic fibers may be meltblown (e.g., meltblown polyester fibers, meltblown nylon fibers, and meltblown poly(phenylene sulfide fibers). In certain embodiments, the synthetic fibers may be other types of non-wet laid fibers (e.g., fibers formed by a non-wet laid process such as meltblown, melt spinning, centrifugal spinning, melt electrospinning, solvent electrospinning, spunbond, or air laid process).

In certain embodiments, the main filter may comprise a high percentage of synthetic fibers with respect to the total weight of fibers in the main filter. For example, in some embodiments, the main filter may comprise greater than or equal to 50 wt% synthetic fibers, greater than or equal to 75 wt% synthetic fibers, greater than or equal to 90 wt% synthetic fibers, greater than or equal to 95 wt% synthetic fibers, or greater than or equal to 99 wt% synthetic fibers. According to certain embodiments, the main filter may comprise less than or equal to 100 wt% synthetic fibers, less than or equal to 99 wt% synthetic fibers, less than or equal to 95 wt% synthetic fibers, less than or equal to 90 wt% synthetic fibers, or less than or equal to 75 wt% synthetic fibers. Combinations of the above-referenced ranges are also possible (e.g., greater than or equal to 50 wt% synthetic fibers and less than or equal to 100 wt% synthetic fibers). Other ranges are also possible. In some embodiments, the main filter may comprise substantially all synthetic fibers.

It should be understood that, in certain embodiments, the main filter may not include a majority of synthetic fibers (i.e., the pre-filter comprises less than 50 wt% synthetic fibers with respect to the total weight of fibers in the main filter); and, in certain embodiments, the main filter may not include any synthetic fibers at all.

In some embodiments, the main filter may comprise non-synthetic fibers. For example, in some embodiments the main filter may comprise glass fibers and/or cellulose fibers.

In accordance with some embodiments, the main filter may comprise a relatively low weight percentage of non-synthetic fibers with respect to the total weight of fibers in the main filter. In some embodiments, the main filter may comprise a weight percentage of non-synthetic fibers that is less than or equal to 50 wt %, less than or equal to 40 wt%, less than or equal to 30 wt%, less than or equal to 25 wt%, less than or equal to 10 wt%, or less than or equal to 5 wt%. In certain embodiments, the main filter may comprise a weight percentage of non-synthetic fibers that is greater than or equal to 1 wt%, greater than or equal to 5 wt%, greater than or equal to 10 wt%, greater than or equal to 25 wt %, greater than or equal to 30 wt%, greater than or equal to 40 wt%, greater than or equal to 50 wt%. Combinations of the above-referenced ranges are also possible (e.g., greater than or equal to 1 wt% and less than or equal to 50 wt%, greater than or equal to 5 wt% and less than or equal to 25 wt%, or greater than or equal to 1 wt% and less than or equal to 5 wt%). Other ranges are also possible.

The fibers within the main filter may have any suitable diameter. In general, as for the pre-filter, individual fiber diameters within the main filter may be measured by microscopy, for example scanning electron microscopy (SEM), and statistics regarding fiber diameter such as average fiber diameter, median fiber diameter, and fiber diameter standard deviation may be determined by performing appropriate statistical techniques on the measured fiber diameters. In certain embodiments, the fibers within the main filter may have an average diameter of greater than or equal to 0.5 microns, greater than or equal to 1 micron, greater than or equal to 1.5 microns, greater than or equal to 2 microns, greater than or equal to 2.5 microns, greater than or equal to 3 microns, greater than or equal to 3.5 microns, greater than or equal to 4 microns, greater than or equal to 4.5 microns, greater than or equal to 5 microns, or greater than or equal to 5.5 microns. According to some embodiments, the fibers within the main filter may have an average diameter of less than or equal to 6 microns, less than or equal to 5.5 microns, less than or equal to 5 microns, less than or equal to 4.5 microns, less than or equal to 4 microns, less than or equal to 3.5 microns, less than or equal to 3 microns, less than or equal to 2.5 microns, less than or equal to 2 microns, less than or equal to 1.5 microns, or less than or equal to 1 micron. Combinations of the above-referenced ranges are also possible (e.g., greater than or equal to 0.5 microns and less than or equal to 6 microns or greater than or equal to 1 micron and less than or equal to 5 microns). Other ranges are also possible.

For embodiments in which the main filter comprises more than one layer, the first layer and second layer of the main filter may each independently have an average fiber diameter of greater than or equal to 1 micron, greater than or equal to 2 microns, greater than or equal to 3 microns, or greater than or equal to 4 microns. In certain such embodiments, the first layer and/ second layer of the main filter may each independently have an average fiber diameter of less than or equal to 5 microns, less than or equal to 4 microns, less than or equal to 3 microns, or less than or equal to 2 microns. Combinations of the above-referenced ranges are also possible (e. g., greater than or equal to 1 micron and less than or equal to 5 microns). Other ranges are also possible.

According to some embodiments in which the main filter comprises at least a third layer, the third layer of the main filter may have an average fiber diameter of greater than or equal to 0.6 microns, greater than or equal to 1 micron, greater than or equal to 2 microns, or greater than or equal to 3 microns. In accordance with certain embodiments, the third layer the main filter may have an average fiber diameter of less than or equal to 4 microns, less than or equal to the 3 microns, less than or equal to 2 microns, or less than or equal to 1 micron. Combinations of the above-referenced ranges are also possible (e. g., greater than or equal to 0.6 microns and less than or equal to four microns). Other ranges are also possible.

In certain embodiments, the fibers within the main filter may also have a median diameter. According to certain embodiments, the median diameter of the fibers within the main filter is greater than or equal to 0.5 microns, greater than or equal to 1 micron, greater than or equal to 1.5 microns, greater than or equal to 2 microns, greater than or equal to 2.5 microns, greater than or equal to 3 microns, greater than or equal to 3.5 microns, greater than or equal to 4 microns, greater than or equal to 4.5 microns, greater than or equal to 5 microns, or greater than or equal to 5.5 microns. According to some embodiments, the median diameter of the fibers within the main filter is less than or equal to 6 microns, less than or equal to 5.5 microns, less than or equal to 5 microns, less than or equal to 4.5 microns, less than or equal to 4 microns, less than or equal to 3.5 microns, less than or equal to 3 microns, less than or equal to 2.5 microns, less than or equal to 2 microns, less than or equal to 1.5 microns, or less than or equal to 1 micron. Combinations of the above-referenced ranges are also possible (e.g., greater than or equal to 0.5 microns and less than or equal to 6 microns or greater than or equal to 1 micron and less than or equal to 5 microns). Other ranges are also possible.

In accordance with some embodiments, the fibers within the main filter may not all have the same diameter. The standard deviation can be used to characterize the variance of the individual fiber diameters with respect to the average fiber diameter. In some embodiments, the fibers within the main filter may have a standard deviation of greater than or equal to 0 microns, greater than or equal to 0.5 microns, greater than or equal to 1 micron, greater than or equal to 1.5 microns, greater than or equal to 2 microns, greater than or equal to 2.5 microns, greater than or equal to 3 microns, greater than or equal to 3.5 microns, greater than or equal to 4 microns, or greater than or equal to 4.5 microns. According to certain embodiments, the fibers within the main filter may have a standard deviation of less than or equal to 5 microns, less than or equal to less than or equal to 4.5 microns, less than or equal to 4 microns, less than or equal to 3.5 microns, less than or equal to 3 microns, less than or equal to 2.5 microns, less than or equal to 2 microns, less than or equal to 1.5 microns, less than or equal to 1 micron, or less than or equal to 0.5 microns. Combinations of the above-referenced ranges are also possible (e.g., greater than or equal to 0 microns and less than or equal to 5 microns or greater than or equal to 1 micron and less than or equal to 3 microns). Other ranges are also possible.

According to some embodiments, the main filter may be impregnated with one or more resins. Non-limiting examples of suitable resins include phenolic resins, epoxy resins, acrylic resins. The resin may compose any suitable weight percent of the total weight of main filter. For example, in some embodiments the main filter comprises resin in an amount of greater than or equal to 0 wt%, greater than or equal to 5 wt%, greater than or equal to 10 wt%, greater than or equal to 15 wt%, greater than or equal to 20 wt%, greater than or equal to 25 wt%, greater than or equal to 30 wt%, or greater than or equal to 35 wt%. In certain embodiments, the main filter comprises resin in an amount of less than or equal to 40 wt%, less than or equal to 35 wt%, less than or equal to 30 wt%, less than or equal to 25 wt%, less than or equal to 20 wt%, less than or equal to 15 wt%, less than or equal to 10 wt%, or less than or equal to 5 wt%. Combinations of the above-referenced ranges are also possible (e.g., greater than or equal to 0 wt% and less than or equal to 40 wt%, greater than or equal to 5 wt% and less than or equal to 40 wt%, or greater than or equal to 5 wt% and less than or equal to 30 wt%). Other ranges are also possible.

In certain embodiments, the main filter may comprise one or more additives. For example, in some embodiments, the main filter may comprise one or more of particles and/or conductive additives. These additives may be present in the main filter in any suitable amount with respect to the total weight of the main filter. In accordance with certain embodiments, additives may be present in the main filter in an amount of greater than or equal to 0 wt%, greater than or equal to 2 wt%, greater than or equal to 5 wt%, greater than or equal to 10 wt%, greater than or equal to 15 wt%, greater than or equal to 20 wt%, greater than or equal to 25 wt%, greater than or equal to 30 wt%, or greater than or equal to 35 wt%. In some embodiments, additives may be present in the main filter in an amount of less than or equal to or 40 wt%, less than or equal to 35wt%, less than or equal to 30 the wt%, less than or equal to 25 wt%, less than or equal to 20 wt%, less than or equal to 15 wt%, less than or equal to 10 wt%, less than or equal to 5 wt%, or less than or equal to 2 wt%. Combinations of the above-referenced ranges are also possible (e.g., greater than or equal to 0 wt% and less than or equal to 40 wt% or greater than or equal to 2 wt% and less than or equal to 20 wt%). Other ranges are also possible.

The main filter has a suitable thickness value. Thickness, as referred to herein, of the main filter is determined according to TAPPI T411 using an appropriate caliper gauge (e.g., a Model 200-A electronic microgauge manufactured by Emveco, tested at 10.34 kPa (1.5 psi)).

For example, in some embodiments, the main filter may have a thickness of greater than or equal to 0.05 mm, greater than or equal to 0.1 mm, greater than or equal to 0.25 mm, greater than or equal to 0.5 mm, greater than or equal to 0.75 mm, greater than or equal to 1 mm, greater than or equal to 1.25 mm, greater than or equal to 1.5 mm, or greater than or equal to 1.75 mm. According to certain embodiments, the main filter may have a thickness of less than or equal to 2 mm, less than or equal to 1.75 mm, less than or equal to 1.5 mm, less than or equal to 1.25 mm, less than or equal to 1 mm, less than or equal to 0.75 mm, less than or equal to 0.5 mm, less than or equal to 0.25 mm, or less than or equal to 0.1 mm. Combinations of the above-referenced ranges are also possible (e. g., greater than or equal to 0.05 mm and less than or equal to 2 mm, greater than or equal to 0.05 mm and less than or equal to 1 mm, or greater than or equal to 0.1 mm and less than or equal to 1 mm). Other ranges are also possible.

As described above, in certain embodiments, the main filter may have more than one layer (e.g., the main filter may have two layers, three layers, or more layers). For those embodiments, each layer within the main filter may independently have any of the thicknesses described above in connection with the thickness of the main filter; or, each layer within the main filter may have a thickness of greater than or equal to 0.03 mm, greater than or equal to 0.15 mm, greater than or equal to 0.2 mm, greater than or equal to 0.3 mm, greater than or equal to 0.35 mm, greater than or equal to 0.4 mm, or greater than or equal to 0.45 mm. In some embodiments in which the main filter has more than one layer, each layer within the main filter may independently have a thickness of less than or equal to 0.45 mm, less than or equal to 0.4 mm, less than or equal to 0.35 mm, less than or equal to 0.3 mm, less than or equal to 0.2 mm, or less than or equal to 0.05 mm. Combinations of the above-referenced ranges are also possible (e.g., greater than or equal to 0.15 mm and less than or equal to 0.45 mm). Other ranges are also possible.

The basis weight of the main filter may have any suitable value. As determined herein, the basis weight of the main filter is measured according to the Technical Association of the Pulp and Paper Industry (TAPPI) Standard T410. The values are expressed in grams per square meter. Basis weight can generally be measured on a laboratory balance that is accurate to 0.1 grams. In some embodiments, the basis weight of the main filter is greater than or equal to 2 g/m², greater than or equal to 5 g/m², greater than or equal to 10 g/m², greater than or equal to 20 g/m², greater than or equal to 30 g/m², greater than or equal to 40 g/m², greater than or equal to 50 g/m², greater than or equal to 55 g/m², or greater than or equal to 60 g/m². According to certain embodiments the basis weight of the main filter is less than or equal to 70 g/m², less than or equal to 60 g/m², less than or equal to 55 g/m², less than or equal to 50 g/m², less than or equal to 40 g/m², less than or equal to 30 g/m², less than or equal to 20 g/m², less than or equal to 10 g/m², or less than or equal to 5 g/m². Combinations of the above-referenced ranges are also possible (e. g., greater than or equal to 2 g/m² and less than or equal to 70 g/m², greater than or equal to 5 g/m² and less than or equal to 55 g/m² or greater than or equal to 10 g/m² and less than or equal to 70 g/m²). Other ranges are also possible.

As described above, in certain embodiments, the main filter may have more than one layer (e.g., the main filter may have two layers, three layers, or more layers). For those embodiments, each layer within the main filter may independently have any of the basis weights described above; or may have a basis weight of greater than or equal to 1 g/m², greater than or equal to 4 g/m², greater than or equal to 15 g/m², greater than or equal to 25 g/m², greater than or equal to 35 g/m², or greater than or equal to 45 g/m². In some embodiments in which the main filter has more than one layer, each layer within the main filter may independently have a basis weight of less than or equal to 45 g/m², less than or equal to 35 g/m², less than or equal to 25 g/m², or less than or equal to 15 g/m². Combinations of the above-referenced ranges are also possible (e.g., greater than or equal to 1 g/m² and less than or equal to 45 g/m², or greater than or equal to 4 g/m² and less than or equal to 40 g/m²). Other ranges are also possible.

In embodiments in which the main filter comprises at least two layers, the ratio of the basis weight of a layer to the basis weight of another layer may be any suitable value. For example, in certain embodiments, the ratio of the basis weight of a layer to the basis weight of another layer may be greater than or equal to 1, greater than or equal to 1.2, greater than or equal to 1.4, greater than or equal to 1.6, greater than or equal to 1.8, greater than or equal to 2, greater than or equal to 2.2, greater than or equal to 2.4, greater than or equal to 2.6, or greater than or equal to 2.8. According to some embodiments, the ratio of the basis weight of a layer to the another layer may be less than or equal to 3, less than or equal to 2.8, less than or equal to 2.6, less than or equal to 2.4, less than or equal to 2.2, less than or equal to 2, less than or equal to 1.8, less than or equal to 1.6, less than or equal to 1.4, or less than or equal to 1.2. Combinations of the above-referenced ranges are also possible (e. g., greater than or equal to 1 and less than or equal to 3). Other ranges are also possible

According to certain embodiments, the main filter may have an air permeability of greater than or equal to 10 cfm, greater than or equal to 20 cfm, greater than or equal to 50 cfm, greater than or equal to 75 cfm, greater than or equal to 100 cfm, greater than or equal to 150 cfm, greater than or equal to 200 cfm, greater than or equal to 250 cfm, greater than or equal to 300 cfm, greater than or equal to 350 cfm, greater than or equal to 400 cfm, or greater than or equal to 450 cfm. According to some embodiments, the main filter may have an air permeability of less than or equal to 500 cfm, less than or equal to 450 cfm, less than or equal to 400 cfm, less than or equal to 350 cfm, less than or equal to 300 cfm, less than or equal to 250 cfm, less than or equal to 200 cfm less than or equal to 150 cfm, less than or equal to 100 cfm, less than or equal to 75 cfm, less than or equal to 50 cfm or less than or equal to 20 cfm. Combinations of the above-referenced ranges are also possible (e. g., greater than or equal to 10 cfm and less than or equal to 500 cfm, greater than or equal to 20 cfm and less than or equal to 250 cfm, greater than or equal to 20 cfm and less than or equal to 200 cfm, or greater than or equal to 35 cfm and less than or equal to 40 cfm). Other ranges are also possible. As determined herein, the permeability is measured according to TAPPI Method T251. The permeability of a filter media is an inverse function of flow resistance and can be measured with a Frazier Permeability Tester. The Frazier Permeability Tester measures the volume of air per unit of time that passes through a unit area of sample at a fixed differential pressure across the sample. Permeability can be expressed in cubic feet per minute per square foot at a 0.5 inch water differential (1CFM = 8.11/m²/s at 200 Pa)

As described above, in certain embodiments, the main filter may have more than one layer. For those embodiments, each layer within the main filter may independently have any of the air permeabilities described above in connection with the main filter. Other ranges are also possible.

Certain main-filters may comprise layers that have different resistances. These differences may be quantified by the normalized resistance ratio between the layers; the normalized resistance ratio of the first layer to the second layer, e.g., is the ratio of the normalized resistance of the first layer divided by the normalized resistance of the second layer, where the normalized resistance of a layer is the resistance of the layer divided by the basis weight of the layer. For embodiments in which the main filter comprises at least two layers, the normalized resistance ratio of one of the layers to another one of the layers may be any suitable value. For example, in some embodiments, the normalized resistance of one layer to another layer is greater than or equal to 0.1, greater than or equal to 0.2, greater than or equal to 0.4, greater than or equal to 0.6, or greater than or equal to 0.7. In accordance with certain embodiments, the normalized resistance of one layer to another one of the layers is less than or equal to 0.8, less than or equal to 0.7, less than or equal to 0.6, less than or equal to 0.4, or less than or equal to 0.2. Combinations of the above-referenced ranges are also possible (e. g., greater than or equal to 0.2 and less than or equal to 0.8). Other ranges are also possible.

In accordance with certain embodiments, the main filter may comprise a mean flow pore size. As used herein, the mean flow pore size refers to the mean flow pore size measured by using a Capillary Flow Porometer manufactured by Porous Materials, Inc. in accordance with the ASTM F316-03 standard. In some embodiments, the mean flow pore size of the main filter may be greater than or equal to 2 microns, greater than or equal to 4 microns, greater than or equal to 5 microns, greater than or equal to 10 microns, greater than or equal to 15 microns, or greater than or equal to 20 microns. According to certain embodiments, the mean flow pore size of the main filter may be less than or equal to 25 microns, less than or equal to 20 microns, less than or equal to 15 microns, less than or equal to 10 microns, less than or equal to 5 microns, or less than or equal to 4 microns. Combinations of the above-referenced ranges are also possible (e. g., greater than or equal to 2 microns and less than or equal to 30 microns, greater than or equal to 4 microns and less than or equal to 25 microns, or greater than or equal to 4 microns and less than or equal to 25 microns). Other ranges are also possible.

As described above, in certain embodiments, the main filter may have more than one layer. For those embodiments, each layer within the main filter may independently have any of the mean flow pore sizes described above, or may have a mean flow pore size of greater than or equal to 25 microns, greater than or equal to 30 microns, or greater than or equal to 35 microns. In some embodiments in which the main filter has more than one layer, each layer within the main filter may independently have a mean flow pore size of less than or equal to 40 microns, less than or equal to 35 microns, or less than or equal to 30 microns. Combinations of the above-referenced ranges are also possible (e.g., greater than or equal to 10 microns and less than or equal to 30 microns, or greater than or equal to 10 microns and less than or equal to 40 microns). Other ranges are also possible.

The pores within the main filter may also be characterized by one or more additional parameter such as a maximum pore size, a minimum pore size, and a pore size standard deviation. These parameters may be determined by using a Capillary Flow Porometer manufactured by Porous Materials, Inc. in accordance with the ASTM F316-03 standard. In certain embodiments, the main filter may have a maximum pore size of greater than or equal to 15 microns, greater than or equal to 20 microns, greater than or equal to 25 microns, greater than or equal to 30 microns, greater than or equal to 35 microns, greater than or equal to 40 microns, greater than or equal to 45 microns, greater than or equal to 50 microns, or greater than or equal to 55 microns. According to some embodiments, the main filter may have a maximum pore size of less than or equal to 60 microns, less than or equal to 55 microns, less than or equal to 50 microns, less than or equal to 45 microns, less than or equal to 40 microns, less than or equal to 35 microns, less than or equal to 30 microns, less than or equal to 25 microns, or less than or equal to 20 microns. Combinations of the above-referenced ranges are also possible (e.g., greater than or equal to 15 microns and less than or equal to 60 microns or greater than or equal to 20 microns and less than or equal to 55 microns). Other ranges are also possible.

In accordance with certain embodiments, the main filter may have a minimum pore size of greater than or equal to 0.5 microns, greater than or equal to 1 micron, greater than or equal to 1.5 microns, greater than or equal to 2 microns, greater than or equal to 5 microns, greater than or equal to 7.5 microns, greater than or equal to 10 microns, greater than or equal to 12.5 microns, or greater than or equal to 15 microns, greater than or equal to 17 microns. According to some embodiments, the main filter may have a minimum pore size of less than or equal to 20 microns, less than or equal to 17 microns, less than or equal to 15 microns, less than or equal to 12.5 microns, less than or equal to 10 microns, less than or equal to 7.5 microns, less than or equal to 5 microns, less than or equal to 2 microns, less than or equal to 1.5 microns, or less than or equal to 1 micron. Combinations of the above-referenced ranges are also possible (e.g., greater than or equal to 0.5 microns and less than or equal to 20 microns or greater than or equal to 1.5 microns and less than or equal to 17 microns). Other ranges are also possible.

According to certain embodiments, the main filter may have a pore size standard deviation of greater than or equal to 0.5 microns, greater than or equal to 1 micron, greater than or equal to 1.5 microns, greater than or equal to 2 microns, greater than or equal to 2.5 microns, greater than or equal to 3 microns, greater than or equal to 3.5 microns, greater than or equal to 4 microns, greater than or equal to 4.5 microns, greater than or equal to 5 microns, or greater than or equal to 5.5 microns. In some embodiments, the main filter may have a pore size standard deviation of less than or equal to 6 microns, less than or equal to 5.5 microns, less than or equal to 5 microns, less than or equal to 4.5 microns, less than or equal to 4 microns, less than or equal to 3.5 microns, less than or equal to 3 microns, less than or equal to 2.5 microns, less than or equal to 2 microns, less than or equal to 1.5 microns, or less than or equal to 1 micron. Combinations of the above-referenced ranges are also possible (e.g., greater than or equal to 0.5 microns and less than or equal to 6 microns or greater than or equal to 1 micron and less than or equal to 5 microns). Other ranges are also possible.

The solidity of the main filter may be any suitable value. In some embodiments, the main filter may comprise a solidity of greater than or equal to 3%, greater than or equal to 5%, greater than or equal to 7%,greater than or equal to 9%, greater than or equal to 11%, or greater than or equal to 13%. According to certain embodiments, the main filter may comprise a solidity of less than or equal to 15%, less than or equal to 13%, less than or equal to 11%, less than or equal to 10%, less than or equal to 9%, less than or equal to 7%, or less than or equal to 5%. Combinations of the above-referenced ranges are also possible (e. g., greater than or equal to 3% and less than or equal to 15%). Other ranges are also possible.

In accordance with certain embodiments, the specific surface area of the main filter may be greater than or equal to 0.01 m²/g, greater than or equal to 0.05 m²/g, greater than or equal to 0.1 m²/g, greater than or equal to 0.5 m²/g, greater than or equal to 1 m²/g, greater than or equal to 1.5 m²/g, greater than or equal to 2 m²/g, greater than or equal to 2.5 m²/g, greater than or equal to 3 m²/g, greater than or equal to 3.5 m²/g, greater than or equal to 4 m²/g, or greater than or equal to 4.5 m²/g. According to certain embodiments, the specific surface area of the main filter may be less than or equal to 5 m²/g, less than or equal to 4.5 m²/g, less than or equal to 4 m²/g, less than or equal to 3.5 m²/g, less than or equal to 3 m²/g, less than or equal to 2.5 m²/g, less than or equal to 2 m²/g, less than or equal to 1.5 m²/g, less than or equal to 1 m²/g, less than or equal to 0.5 m²/g, less than or equal to 0.1 m²/g, or less than or equal to 0.05 m²/g. Combinations of the above-referenced ranges are also possible (e. g., greater than or equal to 0.01 m²/g and less than or equal to 5 m²/g or greater than or equal to 0.1 m²/g and less than or equal to 2.5 m²/g). Other ranges are also possible. The specific surface area is defined as the surface area of the main filter divided by the mass of the main filter. The specific surface area is measured through use of a standard BET surface area measurement technique. The BET surface area is measured according to section 10 of Battery Council International Standard BCIS-03A, "Recommended Battery Materials Specifications Valve Regulated Recombinant Batteries", section 10 being "Standard Test Method for Surface Area of Recombinant Battery Separator Mat". Following this technique, the BET surface area is measured via adsorption analysis using a BET surface analyzer (e.g., Micromeritics Gemini III 2375 Surface Area Analyzer) with nitrogen gas; the sample amount is between 0.5 and 0.6 grams in, e.g., a 3/4" tube; and, the sample is allowed to degas at 75 degrees C for a minimum of 3 hours..

As described above, in certain embodiments, the main filter may have more than one layer (e.g., the main filter may have two layers, three layers, or more layers). For those embodiments, each layer within the main filter may independently have any of the specific surface areas described above, or may have a specific surface area between 0.5 m²/g and 1.2 m²/g or between 0.2 m²/g and 0.6 m²/g. Other ranges are also possible.

As described above, certain articles are related to filter media which comprise one or more layers. The one or more layers may include pre-filters and/or main filters, whose structures and properties have also been described above. In certain embodiments, it may be desirable for the filter media as a whole to have certain properties. Properties of the filter media as a whole and relationships between properties of different component parts of the filter media will be described in more detail below.

In certain embodiments, the filter media (i.e., the entire filter media which includes all layers of the filter media) may comprise a high percentage of synthetic fibers with respect to the total weight of fibers in the filter media. For example, in some embodiments, the filter media may comprise greater than or equal to 50 wt% synthetic fibers, greater than or equal to 75 wt% synthetic fibers, greater than or equal to 90 wt% synthetic fibers, greater than or equal to 95 wt% synthetic fibers, or greater than or equal to 99 wt% synthetic fibers. According to certain embodiments, the filter media may comprise less than or equal to 100 wt% synthetic fibers, less than or equal to 99 wt% synthetic fibers, less than or equal to 95 wt% synthetic fibers, less than or equal to 90 wt% synthetic fibers, or less than or equal to 75 wt% synthetic fibers. Combinations of the above-referenced ranges are also possible (e.g., greater than or equal to 50 wt% synthetic fibers and less than or equal to 100 wt% synthetic fibers). Other ranges are also possible. In some embodiments, the filter media may comprise substantially all synthetic fibers.

In certain embodiments, the average fiber diameter of the pre-filter may have a defined relationship to the average fiber diameter of the main filter. For example, in some embodiments, the ratio of the average fiber diameter of the pre-filter to the average fiber diameter of the main filter may be greater than or equal to 0.2, greater than or equal to 0.5, greater than or equal to 1, greater than or equal to 1.5, greater than or equal to 2, greater than or equal to 2.5, greater than or equal to 3, greater than or equal to 3.5, greater than or equal to 4, or greater than or equal to 4.5. In some embodiments, the ratio of the average fiber diameter of the pre-filter to the average fiber diameter of the main filter may be less than or equal to 5, less than or equal to 4.5, less than or equal to 4, less than or equal to 3.5, less than or equal to 3, less than or equal to 2.5, less than or equal to 2, less than or equal to 1.5, less than or equal to 1, or less than or equal to 0.5. Combinations of the above-referenced ranges are also possible (e.g., greater than or equal to 0.2 and less than or equal to 5). Other ranges are also possible.

The filter media may have any suitable thickness. Thickness, as referred to herein, of the filter media is determined according to TAPPI T411 using an appropriate caliper gauge (e.g., a Model 200-A electronic microgauge manufactured by Emveco, tested at 1.5 psi). In some embodiments, the thickness of the filter media may be greater than or equal to 0.05 mm, greater than or equal to 0.1 mm, greater than or equal to 0.25 mm, greater than or equal to 0.5 mm, greater than or equal to 0.75 mm, greater than or equal to 1 mm, greater than or equal to 1.25 mm, greater than or equal to 1.5 mm, greater than or equal to 1.75 mm, greater than or equal to 2 mm, greater than or equal to 2.25 mm, greater than or equal to 2.5 mm, greater than or equal to 2.75 mm, greater than or equal to 3 mm, greater than or equal to 3.25 mm, greater than or equal to 3.5 mm, greater than or equal to 3.75 mm, greater than or equal to 4 mm, or greater than or equal 4.25 mm. In some embodiments, the thickness of the filter media may be less than or equal to 4.4 mm, less than or equal to 4.25 mm, less than or equal to 4 mm, less than or equal to 3.75 mm, less than or equal to 3.5 mm, less than or equal to 3.25 mm, less than or equal to 3 mm, less than or equal to 2.75 mm, less than or equal to 2.5 mm, less than or equal to 2 mm, less than or equal to 1.75 mm, less than or equal to 1.5 mm, less than or equal to 1.25 mm, less than or equal to 1 mm, less than or equal to 0.75 mm, less than or equal to 0.5 mm, less than or equal to 0.25 mm, or less than or equal to 0.1 mm. Combinations of the above-referenced ranges are also possible (e.g., greater than or equal to 0.05 mm and less than or equal to 2 mm, greater than or equal to 0.1 mm and less than or equal to 1.5 mm, or greater than or equal to 0.5 mm and less than or equal to 4.4 mm). Other ranges are also possible.

In certain embodiments, the pre-filter may be similar in thickness to the main filter. In certain embodiments, the pre-filter may have a greater thickness than the main filter. In some embodiments, the ratio of the thickness of the pre-filter to the thickness of the main filter is greater than or equal to 1, greater than or equal to 1.5, greater than or equal to 2, greater than or equal to 2.5, greater than or equal to 3, greater than or equal to 3.5, greater than or equal to 4, or greater than or equal to 4.5. In some embodiments, the ratio of the thickness of the pre-filter to the thickness of the main filter is less than or equal to 5, less than or equal to 4.5, less than or equal to 4, less than or equal to 3.5, less than or equal to 3, less than or equal to 2.5, less than or equal to 2, or less than or equal to 1.5. Combinations of the above-referenced ranges are also possible (e.g., greater than or equal to 1 and less than or equal to 5). Other ranges are also possible.

The above-described structural properties may enable the filter media to comprise a relatively high dust holding capacity. The dust holding capacity, as referred to herein, is tested based on a Multipass Filter Test following the ISO 16889 procedure (modified by testing a flat sheet sample) on a Multipass Filter Test Stand manufactured by FTI. The testing uses ISO A3 Medium test dust manufactured by PTI, Inc. at an upstream gravimetric dust level of 10 mg/liter. The test fluid is Aviation Hydraulic Fluid AERO HFA MIL H-5606A manufactured by Mobil. The test was run at a face velocity of 0.25 meters/min until a terminal pressure of 200 kPa above the baseline filter pressure drop is obtained.

In certain embodiments, the dust holding capacity of the filter media may be greater than or equal to 40 g/m², greater than or equal to 50 g/m², greater than or equal to 75 g/m², greater than or equal to 100 g/m², greater than or equal to 150 g/m², greater than or equal to 200 g/m², or greater than or equal to 250 g/m². In certain embodiments, the dust holding capacity of the filter media may be less than or equal to 300 g/m², less than or equal to 250 g/m², less than or equal to 200 g/m², less than or equal to 150 g/m², less than or equal to 100 g/m², less than or equal to 75 g/m², or less than or equal to 50 g/m². Combinations of the above-referenced ranges are also possible (e.g., greater than or equal to 40 g/m² and less than or equal to 300 g/m² or greater than or equal to 50 g/m² and less than or equal to 200 g/m²). Other ranges are also possible.

As described above, pre-filter media having the non-linear density variation described herein may advantageously trap high amounts of dust particles which can enhance main filter performance and lifetime. According to some embodiments, the above-described structural properties may enable the filter media to be capable of localizing a high percentage of the total dust trapped within the pre-filter. In certain embodiments, the percentage of the total dust that is trapped by the pre-filter is greater than or equal to 50%, greater than or equal to 55%, greater than or equal to 60%, greater than or equal to 65%, greater than or equal to 70%, greater than or equal to 75%, greater than or equal to 80%, greater than or equal to 85%, greater than or equal to 90%, or greater than or equal to 95%. In certain embodiments, the percentage of the total dust that is trapped by the pre-filter may be less than or equal to 100%, less than or equal to 95%, less than or equal to 90%, less than or equal to 85%, less than or equal to 80%, less than or equal to 75%, less than or equal to 70%, less than or equal to 65%, less than or equal to 60%, or less than or equal to 55%. Combinations of the above-referenced ranges are also possible (e.g., greater than or equal to 50% and less than or equal to 100% or greater than or equal to 60% and less than or equal to 90%). Other ranges are also possible.

Efficiency can be expressed in terms of a beta value (or beta ratio), where beta₍ₓ₎ = y is the ratio of upstream count (C₀) to downstream count (C), and where x is the minimum particle size that will achieve the actual ratio of C₀ to C that is equal to y. The penetration fraction of the media is 1 divided by the beta₍ₓ₎ value (y), and the efficiency fraction is 1-penetration fraction. Accordingly, the efficiency of the media is 100 times the efficiency fraction, and 100^{∗}(1 - 1/beta₍ₓ₎) = efficiency percentage. For example, a filter media having a beta₍ₓ₎ = 200 has an efficiency of [1 - (1/200)]^{∗}100, or 99.5% for x micron or larger particles. The filter media described herein may have a wide range of beta values, e.g., a beta₍ₓ₎ = y, where x can be, for example, 1, 3, 5, 7, 10, 12, 15, 20, 25, 30, 50, 70, or 100, and where y can be, for example, at least 2, at least 10, at least 75, at least 100, at least 200, or at least 1000. It should be understood that other values of x and y are also possible; for instance, in some cases, y may be greater than 1000. It should also be understood that for any value of x, y may be any number (e.g., 10.2, 12.4) representing the actual ratio of C₀ to C. Likewise, for any value of y, x may be any number representing the minimum particle size that will achieve the actual ratio of C₀ to C that is equal to y.

The efficiency of a media or a layer of media may also be referred to as having a particular micron rating, x, for a certain beta efficiency (e.g., beta 200), meaning that the media or layer has that efficiency (e.g., beta 200 = 99.5% efficiency) for trapping x micron or larger particles. Generally, a lower micron rating means that the media or layer is able to trap smaller particles or is more "efficient" than a media or layer having a relatively larger micron rating. Unless otherwise stated, a micron rating described herein is determined for a beta 200 efficiency (i.e., the average micron size at a terminal pressure of 200 kPa based on the Multipass Filter Test described above).

For instance, in some embodiments, the beta 200 of the filter media may be greater than or equal to 1 micron, greater than or equal to 2 microns, greater than or equal to 3 microns, greater than or equal to 5 microns, greater than or equal to 10 microns, greater than or equal to 15 microns, greater than or equal to 20 microns, greater than or equal to 25 microns, greater than or equal to 30 microns, greater than or equal to 35 microns, greater than or equal to 40 microns, greater than or equal to 45 microns, greater than or equal to 50 microns, or greater than or equal to 55 microns. In some embodiments the beta 200 of the filter media may be less than or equal to 60 microns, less than or equal to 50 microns, less than or equal to 45 microns, less than or equal to 40 microns, less than or equal to 35 microns, less than or equal to 30 microns, less than or equal to 25 microns, less than or equal to 20 microns, less than or equal to 15 microns, less than or equal to 10 microns, less than or equal to 5 microns, less than or equal to 3 microns, or less than or equal to 2 microns. Combinations of the above-referenced ranges are also possible (e.g., greater than or equal to 1 micron and less than or equal to 60 microns, or greater than or equal to 3 microns and less than or equal to 30 microns). Other ranges are also possible. The beta 200 may be determined using the Multipass Filter Test described above.

The filter media may have a basis weight of any suitable value. As determined herein, the basis weight of the filter media is measured according to the Technical Association of the Pulp and Paper Industry (TAPPI) Standard T410. The values are expressed in grams per square meter. In certain embodiments, the filter media may have a basis weight of greater than or equal to 20 g/m², greater than or equal to 25 g/m², greater than or equal to 50 g/m², greater than or equal to 100 g/m², greater than or equal to 150 g/m², greater than or equal to 200 g/m², or greater than or equal to 250 g/m². According to some embodiments, the filter media may have a basis weight of less than or equal to 300 g/m², less than or equal to 250 g/m², less than or equal to 200 g/m², less than or equal to 150 g/m², less than or equal to 100 g/m², less than or equal to 50 g/m², or less than or equal to 25 g/m². Combinations of the above-referenced ranges are also possible (e.g., greater than or equal to 20 g/m² and less than or equal to 300 g/m² or greater than or equal to 25 g/m² and less than or equal to 200 g/m²). Other ranges are also possible.

According to some embodiments, the filter media may have an air permeability that is particularly advantageous. As determined herein, the permeability is measured according to TAPPI Method T251. The permeability of a filter media is an inverse function of flow resistance and can be measured with a Frazier Permeability Tester. The Frazier Permeability Tester measures the volume of air per unit of time that passes through a unit area of sample at a fixed differential pressure across the sample. Permeability can be expressed in cubic feet per minute per square foot at a 0.5 inch water differential (1CFM = 8.11/m²/s at 200 Pa)

Z . In certain embodiments, the filter media may have an air permeability of greater than or equal to 10 cfm, greater than or equal to 15 cfm, greater than or equal to 25 cfm, greater than or equal to 50 cfm, greater than or equal to 75 cfm, greater than or equal to 100 cfm, greater than or equal to 150 cfm, greater than or equal to 200 cfm, or greater than or equal to 250 cfm. In some embodiments, the filter media may have an air permeability of less than or equal to 300 cfm, less than or equal to 250 cfm, less than or equal to 200 cfm, less than or equal to 150 cfm, less than or equal to 100 cfm, less than or equal to 75 cfm, less than or equal to 50 cfm, less than or equal to 25 cfm, or less than or equal to 15 cfm. Combinations of the above-referenced ranges are also possible (e.g., greater than or equal to 10 cfm and less than or equal to 300 cfm or greater than or equal to 15 cfm and less than or equal to 250 cfm). Other ranges are also possible.

In some embodiments, the filter media may comprise a mean flow pore size. In certain embodiments, the filter media has a mean flow pore size of greater than or equal to 2 microns, greater than or equal to 3 microns, greater than or equal to 5 microns, greater than or equal to 10 microns, greater than or equal to 15 microns, greater than or equal to 20 microns, greater than or equal to 25 microns, greater than or equal to 30 microns, greater than or equal to 35 microns, greater than or equal to 40 microns, greater than or equal to 45 microns, greater than or equal to 50 microns, or greater than or equal to 55 microns. In certain embodiments, the filter media has a mean flow pore size of less than or equal to 60 microns, less than or equal to 55 microns, less than or equal to 50 microns, less than or equal to 45 microns, less than or equal to 40 microns, less than or equal to 35 microns, less than or equal to 30 microns, less than or equal to 25 microns, less than or equal to 20 microns, less than or equal to 15 microns, less than or equal to 10 microns, less than or equal to 5 microns, or less than or equal to 3 microns. Combinations of the above-referenced ranges are also possible (e.g., greater than or equal to 2 microns and less than or equal to 60 microns or greater than or equal to 3 microns and less than or equal to 45 microns). Other ranges are also possible. As used herein, the mean flow pore size refers to the mean flow pore size measured by using a Capillary Flow Porometer manufactured by Porous Materials, Inc in accordance with the ASTM F316-03 standard.

The pores within the filter media may comprise any suitable size and any suitable size distribution. These parameters may be determined by using a Capillary Flow Porometer manufactured by Porous Materials, Inc. in accordance with the ASTM F316-03 standard. In some embodiments, the filter media may have a maximum pore size of greater than or equal to 15 microns, greater than or equal to 20 microns, greater than or equal to 25 microns, greater than or equal to 30 microns, greater than or equal to 35 microns, greater than or equal to 40 microns, greater than or equal to 45 microns, greater than or equal to 50 microns, or greater than or equal to 55 microns. In some embodiments, the filter media may have a maximum pore size of less than or equal to 60 microns, less than or equal to 55 microns, less than or equal to 50 microns, less than or equal to 45 microns, less than or equal to 40 microns, less than or equal to 35 microns, less than or equal to 30 microns, less than or equal to 25 microns, or less than or equal to 20 microns. Combinations of the above-referenced ranges are also possible (e.g., greater than or equal to 15 microns and less than or equal to 60 microns or greater than or equal to 15 microns and less than or equal to 40 microns). Other ranges are also possible.

In certain embodiments, the filter media may have a minimum pore size of greater than or equal to 1.5 microns, greater than or equal to 2 microns, greater than or equal to 4 microns, greater than or equal to 6 microns, or greater than or equal to 8 microns. In some embodiments, the filter media may have a minimum pore size of less than or equal to 10 microns, less than or equal to 8 microns, less than or equal to 6 microns, less than or equal to 4 microns, or less than or equal to 2 microns. Combinations of the above-referenced ranges are also possible (e.g., greater than or equal to 1.5 microns and less than or equal to 10 microns and greater than or equal to 2 microns and less than or equal to 8 microns). Other ranges are also possible.

In certain embodiments, the pores within the filter media may have a standard deviation of greater than or equal to 1 micron, greater than or equal to 2 microns, greater than or equal to 4 microns, greater than or equal to 6 microns, or greater than or equal to 8 microns. In certain embodiments, the pores within the filter media may have a standard deviation of less than or equal to 10 microns, less than or equal to 8 microns, less than or equal to 6 microns, less than or equal to 4 microns, or less than or equal to 2 microns. Combinations of the above-referenced ranges are also possible (e.g., greater than or equal to 1 micron and less than or equal to 10 microns or greater than or equal to 2 microns and less than or equal to 8 microns). Other ranges are also possible.

The filter media may be produced using processes based on known techniques. In some cases, the filter media is produced using a wet laid or a non-wet laid process. In some embodiments, one layer (e.g., a pre-filter may be produced by a wet laid process) and a second layer (e.g., a main filter) may be produced by a non-wet laid process. In general, a wet laid process involves mixing together the fibers; for example, different types of fibers may be mixed together to produce a slurry. In some cases, the slurry is an aqueous-based slurry. In some embodiments, fibers of different types are processed through a pulper and/or a holding tank prior to being mixed together.

It should be appreciated that any suitable method for creating a fiber slurry may be used. In some cases, additional additives are added to the slurry to facilitate processing. The temperature may also be adjusted to a suitable range, for example, between 273 K (33 °F) and 311 K (100 °F) (e.g., between 283 K (50 °F) and 303 K (85 °F)). In some embodiments, the temperature of the slurry is maintained. In some cases, the temperature is not actively adjusted.

In some embodiments, the wet laid process uses similar equipment as a conventional papermaking process, which includes a hydropulper, a former or a headbox, a dryer, and an optional converter. For example, the slurry may be prepared in one or more pulpers. After appropriately mixing the slurry in a pulper, the slurry may be pumped into a headbox, where the slurry may or may not be combined with other slurries or additives may or may not be added. The slurry may also be diluted with additional water such that the final concentration of fiber is in a suitable range, such as for example, between about 0.1% to 0.5% by weight.

In some cases, the pH of the fiber slurry may be adjusted as desired. For instance, the pH of the fiber slurry may range between about 3 and about 9, or between about 6 and about 7.

Before the slurry is sent to a headbox, the slurry may be passed through centrifugal cleaners for removing unfiberized components. The slurry may or may not be passed through additional equipment such as refiners or deflakers to further enhance the dispersion of the fibers. Fibers may then be collected on a screen or wire at an appropriate rate using any suitable machine, e.g., a fourdrinier, a rotoformer, a cylinder, or an inclined wire fourdrinier.

In some embodiments, the process involves introducing binder (and/or other components) into a pre-formed fiber layer. In some embodiments, as the fiber layer is passed along an appropriate screen or wire, different components included in the binder, which may be in the form of separate emulsions, are added to the fiber layer using a suitable technique. In some cases, each component of the binder resin is mixed as an emulsion prior to being combined with the other components and/or fiber layer. In some embodiments, the components included in the binder may be pulled through the fiber layer using, for example, gravity and/or vacuum. In some embodiments, one or more of the components included in the binder resin may be diluted with softened water and pumped into the fiber layer.

As noted above, different layers of fibers may be combined to produce filter media based on desired properties. For example, in some embodiments, a relatively coarser pre-filter layer may be combined with a relatively finer fiber layer (i.e., a main filter layer) to form a multi-layered filter media. Optionally, the filter media can include one or more additional finer fiber layers as described above.

Multi-region filter media layer(s) (e.g., the pre-filter) may be formed in an appropriate manner. As an example, a multi-region layer may be prepared by a wet laid process where a first fiber slurry (e.g., fibers in an aqueous solvent such as water) is applied onto a wire conveyor to form a first region. A second fiber slurry (e.g., fibers in an aqueous solvent such as water) is applied onto the first fiber slurry either simultaneously or after the first fiber slurry is applied to the wire. Vacuum may be continuously applied to the first and second slurries during the above process to remove solvent from the fibers, resulting in the simultaneous formation of the first and second regions into a composite layer. The composite layer is then dried. Due to this fabrication process, at least a portion of the fibers in the first region can be intertwined with at least a portion of the fibers from the second region (e.g., at the interface between the two regions). Additional regions can also be formed and added using a similar process and/or a different process may be used to form additional layer(s) (e.g., a process such as stacking, point bonding, powder bonding, hot melt bonding, lamination (e.g., ultrasonic lamination), co-pleating, or collation (i.e., placed directly adjacent one another and kept together by pressure). For example, in some cases, two or more regions of a pre-filter are formed into a composite layer by a wet laid process in which separate fiber slurries are laid one on top of the other as water is drawn out of the slurry, and the composite layer is then combined with a second layer (e.g., a main filter layer) by any suitable process (e.g., lamination, co-pleating, or collation). It can be appreciated that filter media or composite layer(s) formed by a wet laid process may be suitably tailored not only based on the components of each fiber layer, but also according to the effect of using multiple fiber layers of varying properties in appropriate combination to form filter media having the characteristics described herein.

In one set of embodiments, at least two layers of a filter media (e.g., a layer and a composite layer comprising more than one regions, or two composite layers each comprising more than one region) are laminated together. For instance, a first layer (e.g., a pre-filter layer including relatively coarse fibers) may be laminated with a second layer (e.g., a main filter layer including relatively fine fibers), where the first and second layers face each other to form a single, multilayer article (e.g., a composite article) that is integrally joined in a single process line assembly operation to form the filter media. If desired, the first and second layers can be combined with another main filter layer (e.g., a third layer) using any suitable process before or after the lamination step. In other embodiments, two or more layers (e.g., main filter layers) are laminated together to form a multilayer article. After lamination of two or more layers into a composite article, the composite article may be combined with additional layers via any suitable process.

In certain embodiments, one or more layers of a filter media described herein may be non-wet laid (e.g., formed of a non-wet laid process such as meltblown, melt spinning, centrifugal spinning, melt electrospinning, solvent electro spinning, spunbond, or air laid process). For some embodiments, one or more layers (e.g., a second layer) of a filter media described herein may be produced from a non-wet laid process (e.g., a meltblown process). For example, meltblown processes and manufacturing methods described in U.S. Patent Publication No. 2009/0120048, entitled "Meltblown Filter Medium," which is incorporated herein by reference in its entirety for all purposes, may be used, including the lamination techniques described therein.

Each layer and region within the filter media may independently be formed by any of the above-described processes. For example, in some embodiments, the pre-filter may be formed by either a wet laid process or a non-wet laid process. In certain embodiments, the main filter may be formed by one of the following processes: meltblown, melt spinning, centrifugal spinning, melt electrospinning, solvent electrospinning, spunbond, or air laid process.

Each layer may be manufactured and adhered on to any other layer in any appropriate manner. In certain embodiments, two or more layers may be adhered together with scrim on the outside. In some embodiments, two or more layers may be adhered together without scrim on the outside.

During or after formation of a layer, a composite layer including two or more combined regions, or a final filter media, the layer, composite article or final filter media may be further processed according to a variety of known techniques. For example, the filter media or portions thereof may be pleated and used in a pleated filter element. For instance, two layers may be joined by a co-pleating process. In some embodiments, filter media, or various layers thereof, may be suitably pleated by forming score lines at appropriately spaced distances apart from one another, allowing the filter media to be folded. It should be appreciated that any suitable pleating technique may be used. The physical and mechanical qualities of the filter media can be tailored to provide, in some embodiments, an increased number of pleats, which may be directly proportional to increased surface area of the filter media. The increased surface area may allow the filter media to have an increased filtration efficiency of particles from fluids. For example, in some cases, the filter media described herein includes 79-472 pleats per meter (2-12 pleats per inch), 118-315 pleats per meter (3-8 pleats per inch), or 79-197 pleats per meter (2-5 pleats per inch). Other values are also possible.

It should be appreciated that the filter media may include other parts in addition to the two or more layers described herein. In some embodiments, further processing includes incorporation of one or more structural features and/or stiffening elements. For instance, the media may be combined with additional structural features such as polymeric and/or metallic meshes. In one embodiment, a screen backing may be disposed on the filter media, providing for further stiffness. In some cases, a screen backing may aid in retaining the pleated configuration. For example, a screen backing may be an expanded metal wire or an extruded plastic mesh.

During or after formation of a layer, a composite layer including two or more combined regions, or a final filter media, the layer, composite article or final filter media may be further processed according to a variety of known techniques. In some embodiments, further processing may involve corrugation of one or more layers of the filter media (e.g., the main filter layer). For instance, in one example, the main filter layer is corrugated and laminated to another layer (e.g., a second layer) such that one side of the peaks are joined to portions of the surface of the other layer. The corrugation may be performed in the machine direction or cross direction. In some embodiments, corrugation may result in waves within the layer having an amplitude and/or frequency as described herein.

In embodiments in which one or more layers (e.g., the main filter layer) is corrugated, the frequency of the waves in the corrugated layer(s) may be less than or equal to about 394, less than or equal to about 354, less than or equal to about 315, less than or equal to about 276, less than about 236, less than or equal to about 197, or less than or equal to about 157, or less than or equal to about 118 cycles per meter (10, less than or equal to about 9, less than or equal to about 8, less than or equal to about 7, less than about 6, less than or equal to about 5, or less than or equal to about 4, or less than or equal to about 3 cycles per inch). In some instances, the frequency may be greater than or equal to about 79, greater than or equal to about 118, greater than or equal to about 157, greater than or equal to about 197, greater than or equal to about 236, greater than or equal to about 276, or greater than or equal to about 315 cycles per meter (2, greater than or equal to about 3, greater than or equal to about 4, greater than or equal to about 5, greater than or equal to about 6, greater than or equal to about 7, or greater than or equal to about 8 cycles per inch). Combinations of the above-referenced ranges are possible (e.g., greater than or equal to about 79 meter and less than or equal to about 394 meter, greater than or equal to about 157 meter and less than or equal to about 315 meter) (e.g., greater than or equal to about 2 inch and less than or equal to about 10 inch, greater than or equal to about 4 inch and less than or equal to about 8 inch). As used herein, cycles per meter/inch has its ordinary meaning in the art and may refer to the cycles in a layer or filter media per unit meter/inch. One cycle corresponds to one peak to the next adjacent peak.

As previously indicated, the filter media disclosed herein can be incorporated into a variety of filter elements for use in various applications including hydraulic and nonhydraulic filtration applications. Exemplary uses of hydraulic filters (e.g., high-, medium-, and low-pressure filters) include mobile and industrial filters. Exemplary uses of non-hydraulic filters include fuel filters (e.g., automotive fuel filters), oil filters (e.g., lube oil filters or heavy duty lube oil filters), chemical processing filters, industrial processing filters, medical filters (e.g., filters for blood), air filters, and water filters. In some cases, filter media described herein can be used as coalescer filter media.

In some cases, the filter element includes a housing that may be disposed around the filter media. The housing can have various configurations, with the configurations varying based on the intended application. In some embodiments, the housing may be formed of a frame that is disposed around the perimeter of the filter media. For example, the frame may be thermally sealed around the perimeter. In some cases, the frame has a generally rectangular configuration surrounding all four sides of a generally rectangular filter media. The frame may be formed from various materials, including for example, cardboard, metal, polymers, or any combination of suitable materials. The filter elements may also include a variety of other features known in the art, such as stabilizing features for stabilizing the filter media relative to the frame, spacers, or any other appropriate feature.

In one set of embodiments, the filter media described herein is incorporated into a filter element having a cylindrical configuration, which may be suitable for hydraulic and other applications. The cylindrical filter element may include a steel support mesh that can provide pleat support and spacing, and which protects against media damage during handling and/or installation. The steel support mesh may be positioned as an upstream and/or downstream layer. The filter element can also include upstream and/or downstream support layers that can protect the filter media during pressure surges. These layers can be combined with filter media, which may include two or more layers as noted above. The filter element may also have any suitable dimensions. For example, the filter element may have a length of at least 0.38 meter (15 inches), at least 0.51 meter (20 inches), at least 0.64 meter (25 inches), at least 0.76 meter (30 inches), at least 1.02 meter (40 inches), or at least 1.14 meter (45 inches). The surface area of the filter media may be, for example, at least 0.142 square meter (220 square inches), at least 0.148 square meter (230 square inches), at least 0.161 square meter (250 square inches), at least 0.174 square meter (270 square inches), at least 0.187 square meter (290 square inches), at least 0.200 square meter (310 square inches), at least 0.213 square meter (330 square inches), at least 0.226 square meter (350 square inches), or at least 0.239 square meter (370 square inches).

The filter elements may have the same property values as those noted above in connection with the filter media. For example, the above-noted resistance ratios, basis weight ratios, dirt holding capacities, efficiencies, specific capacities, and fiber diameter ratios between various layers of the filter media may also be found in filter elements.

During use, the filter media mechanically trap particles on or in the layers as fluid flows through the filter media. The filter media need not be electrically charged to enhance trapping of contamination. Thus, in some embodiments, the filter media are not electrically charged. However, in some embodiments, the filter media may be electrically charged.

### EXAMPLE 1

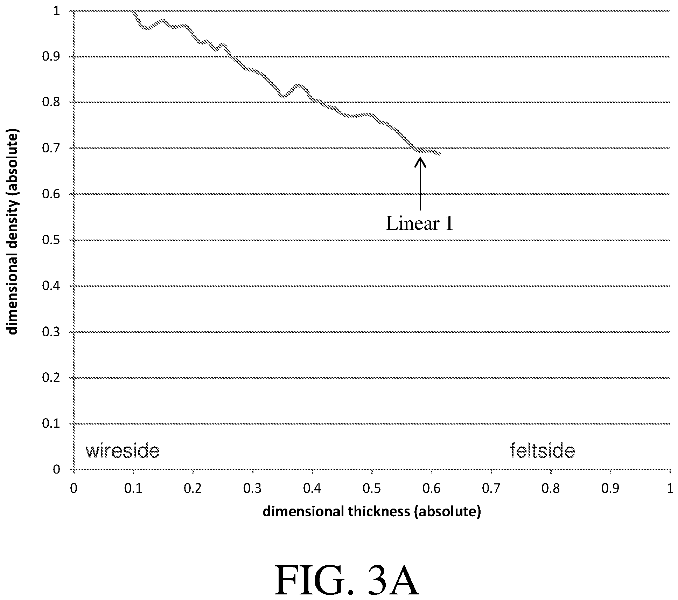

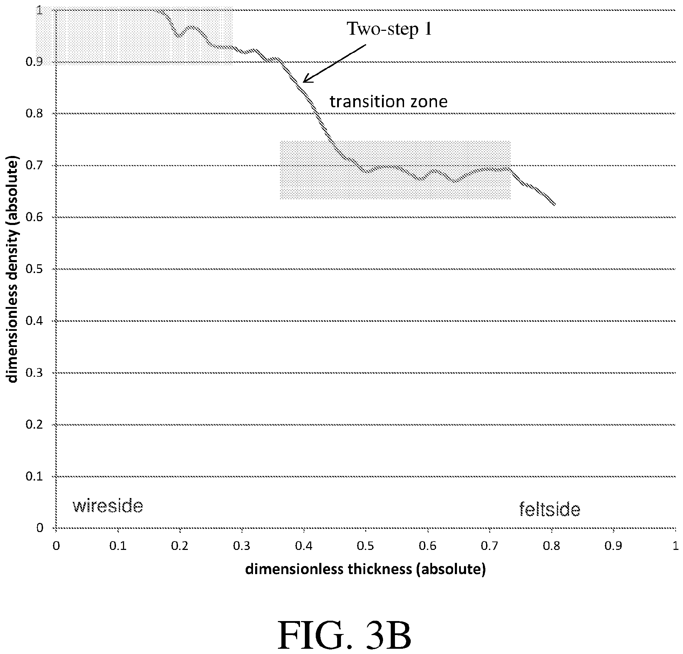

This example describes the physical properties of several filter media according to various embodiments of the invention. The filter media comprised both a three layer main filter and a pre-filter layer. Two pre-filters with two-step density curves and one pre-filter with a linear density curve were prepared using a wet laid process and their various physical properties were measured as described above. The density curve for the exemplary pre-filter with a linear density curve is shown in FIG. 3A; a density curve for one of the exemplary pre-filters with a two-step density curve is shown in FIG. 3B. The main filters were fabricated using a non-wet laid meltblown process.

Table 1 shows the thickness, average dust holding capacity, shape of the density curve, and void volume of each filter media. The average dust holding capacity was determined by measuring the dust holding capacity of at least two samples which contained each pre-filter in combination with a main filter and then averaging. As can be seen from this table, the filter media which included pre-filters with a two-step density curve exhibited higher dust holding capacity than the filter media which included the pre-filter with a linear density curve.

**Table 1: Comparison of various pre-filters.**

| | Two-step 1 | Two-step 2 | Linear 1 |
|---|---|---|---|
| Thickness (mm) | 0.533 | 0.677 | 0.536 |
| Average DHC of the filter media (g/m²) | 160 | 150 | 120 |
| Shape of the density curve | Two-step | Two-step | Linear |
| Void volume (%) | 87.7 | 90.3 | 87.8 |

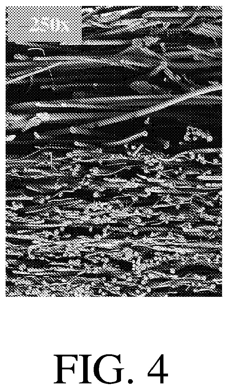

SEM images were taken of selected pre-filters; an image of pre-filter Two-step 1 (which has a two-step density curve) is shown in FIG. 4.

### EXAMPLE 2

This example describes the physical properties of filter media comprising pre-filter Two-step 2 as described in Example 1 and a linear pre-filter (Linear 2).

In a first experiment, filter media comprising both a main filter and either pre-filter Two-step 2 or pre-filter Linear 2 were fabricated. The main filters were fabricated using a non-wet laid meltblown process. The main filter was a three layer filter with a thickness of 0.42 microns. Each layer comprised polyester fibers with fiber diameters ranging between 0.6 and 5 microns.

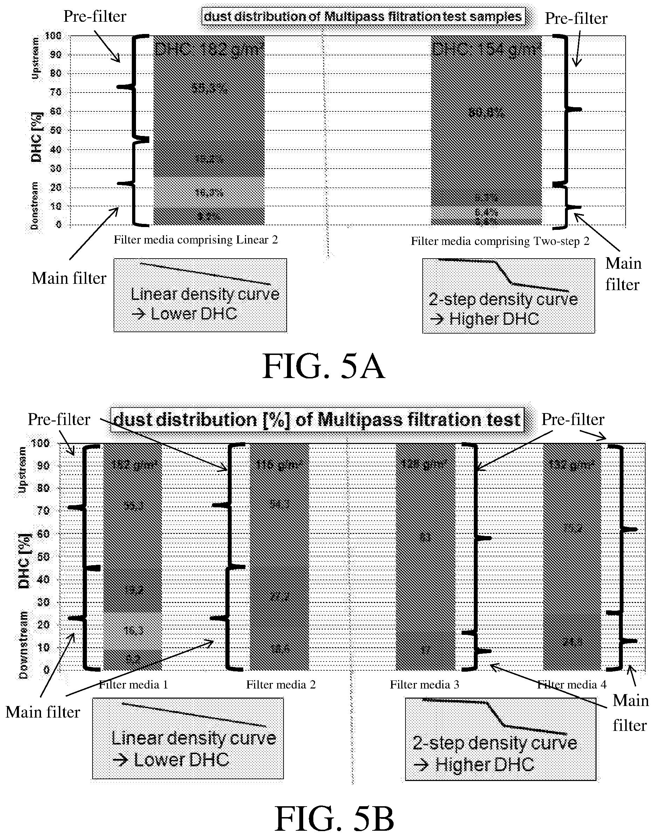

In the first experiment, as shown in FIG. 5A, the total amount of dust retained in the pre-filter was significantly larger in the filter media comprising pre-filter Two-Step 2 (80.8% of 154 g/m² is 124.4 g/m²) than in the filter media comprising pre-filter Linear 2 (55.3% of 182 g/m² is 100.6 g/m²).

Furthermore, the amount of dust retained in the pre-filter as a fraction of total dust retained in the filter media was significantly higher in the filter media comprising pre-filter Two-step 2 (where 80.8% of the total dust retained was retained in the pre-filter) than in the filter media comprising pre-filter Linear 2 (where 55.3% of the total dust retained was retained in the pre-filter). This allowed the main filter positioned downstream from pre-filter Two-step 2 to be exposed to a relatively lower amount of dust than the main filter positioned downstream from pre-filter Linear 2. Exposure of the main filter to relatively low amounts of dust results in performance advantages for the filter media including pre-filter Two-step 2.

In a second experiment, various main filter layers were paired with either pre-filter Two-step 2 or pre-filter Linear 2, as shown in FIG. 5B.

Filter media 1 comprised pre-filter Linear 2 paired with the same main filter as in the first experiment and as shown in FIG. 5A.

Filter media 2 comprised pre-filter Linear 2 paired with a two layer main filter.

Filter media 3 comprised pre-filter Two-step 2 and a single layer main filter that comprised polyester fibers with an average fiber diameter between 0.5 and 3 microns.

Filter media 4 comprised pre-filter Two-step 2 and a main filter that comprised two single layer polyester fiber main filters collated together.

As shown in FIG. 5B, at least 75% of the total dust captured was captured by the pre-filter in filter media 3 and 4, which comprised pre-filter Two-step 2. By contrast, at most 55% of the total dust captured was captured by the pre-filter in filter media 1 and 2, which instead comprised pre-filter Linear 2. Thus, the two-step pre-filter was capable of localizing a higher percentage of the captured dust within the pre-filter than the linear pre-filter. This held true across different main filter types. It is also notable that the percentage of total dust captured by the pre-filter was relatively consistent for a given pre-filter even as the identity of the main filter varied.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to.

## Claims

1. A filter media comprising at least a first layer comprising synthetic fibers, wherein the weight of the synthetic fibers comprises at least 90% of the total weight of fibers in the first layer,
the first layer having a bottom surface and a top surface and a thickness that extends from the bottom surface to the top surface,
the first layer having a density that changes from a maximum density to a minimum density,
wherein the density changes non-linearly with thickness from the top surface to the bottom surface,
wherein the change in density between the bottom surface to a dimensional thickness of 0.25 from the bottom surface is less than 20% of the maximum density, and
wherein the change in density between a dimensional thickness of 0.5 from the bottom surface to 0.75 from the bottom surface is less than 20% of the maximum density.

2. The filter media according to claim 1, further comprising:
a second layer comprising fibers and adjacent to the bottom surface of the first layer.

3. The filter media of any preceding claim, wherein:
the change in density between the bottom surface to a dimensional thickness of 0.35 from the bottom surface is less than 12% of the maximum density; and/or
the density between a dimensional thickness of 0.5 from the bottom surface to a dimensional thickness of 0.75 from the bottom surface is between 65% and 75% of the maximum density.

4. The filter media of any preceding claim, wherein:
(a) the weight of the synthetic fibers in the first layer comprises at least 90% of the total weight of fibers in the first layer; and/or
(b) the weight of the synthetic fibers in the filter media comprises at least 90% of the total weight of fibers in the filter media.

5. The filter media of any preceding claim, wherein:
(a) the weight of the synthetic fibers in the first layer comprises substantially all of the total weight of fibers in the first layer; and/or
(b) the weight of the synthetic fibers in the filter media comprises substantially all of the total weight of fibers in the filter media.

6. The filter media of any preceding claim, wherein:
(a) the change in density between the bottom surface to a dimensional thickness of 0.25 from the bottom surface is less than 15% of the maximum density; and/or
(b) the change in density between the bottom surface to a dimensional thickness of 0.35 from the bottom surface is less than 15% of the maximum density; and/or
(c) the change in density between a dimensional thickness of 0.5 from the bottom surface to 0.75 from the bottom surface is less than 15% of the maximum density.

7. The filter media of any preceding claim, wherein the first layer includes a first region formed on a second region, wherein a region of the first layer is defined as the portion of the first layer formed from the same type of fibers, and, optionally:
(a) further comprising a transition region between the first region and the second region; and/or
(b) wherein the second region extends from the bottom surface to at least a dimensional thickness of 0.25 from the bottom surface.

8. The filter media of claim 7, wherein:
(a) the first region extends from at least a dimensional thickness of 0.5 from the bottom surface to at least a dimensional thickness of 0.75 from the bottom surface; and/or
(b) the second region comprises fibers having an average fiber diameter less than an average diameter of fibers in the first region.

9. The filter media of any preceding claim, wherein the density changes with thickness following a two-step density curve from the bottom surface to the top surface.

10. The filter media of any preceding claim, wherein the first layer is a pre-filter and the second layer is a main filter.

11. The filer media of any preceding claim, wherein the first layer is configured to capture greater than 70% of the dust captured by the filter media following a dust holding capacity test.

12. The filter media of any preceding claim, wherein the second layer includes multiple layers.

13. The filter media of any preceding claim, wherein the second layer comprises a meltblown layer.

14. The filter media of any preceding claim, wherein the first layer comprises a wet-laid layer.

15. A hydraulic filter element comprising the filter media according to any preceding claim.

## Patentansprüche

1. Filtermedien, umfassend mindestens eine erste Schicht, die Kunstfasern umfasst, wobei das Gewicht der Kunstfasern mindestens 90% des Gesamtgewichts an Fasern in der ersten Schicht umfasst,
wobei die erste Schicht eine Bodenoberfläche und eine Oberseitenoberfläche und eine Dicke, die sich von der Bodenoberfläche zu der Oberseitenoberfläche erstreckt, aufweist,
die erste Schicht eine Dichte aufweist, die sich von einer Höchstdichte zu einer Mindestdichte ändert,
wobei die Dichte sich nichtlinear mit der Dicke von der Oberseitenoberfläche zu der Bodenoberfläche ändert,
wobei die Änderung der Dichte zwischen der Bodenoberfläche zu einer dimensionalen Dicke von 0,25 von der Bodenoberfläche geringer als 20% der Höchstdichte ist, und
wobei die Änderung der Dichte zwischen einer dimensionalen Dicke von 0,5 von der Bodenoberfläche zu 0,75 von der Bodenoberfläche geringer als 20% der Höchstdichte ist.

2. Filtermedien nach Anspruch 1, weiter umfassend:
eine zweite Schicht, die Fasern umfasst und an die Bodenoberfläche der ersten Schicht angrenzt.

3. Filtermedien nach einem vorstehenden Anspruch, wobei:
die Änderung der Dichte zwischen der Bodenoberfläche zu einer dimensionalen Dicke von 0,35 von der Bodenoberfläche geringer als 12% der Höchstdichte ist; und/oder
die Dichte zwischen einer dimensionalen Dicke von 0,5 von der Bodenoberfläche zu einer dimensionalen Dicke von 0,75 von der Bodenoberfläche zwischen 65% und 75% der Höchstdichte ist.

4. Filtermedien nach einem vorstehenden Anspruch, wobei:
(a) das Gewicht der Kunstfasern in der ersten Schicht mindestens 90% des Gesamtgewichts an Fasern in der ersten Schicht umfasst; und/oder
(b) das Gewicht der Kunstfasern in den Filtermedien mindestens 90% des Gesamtgewichts an Fasern in den Filtermedien umfasst.

5. Filtermedien nach einem vorstehenden Anspruch, wobei:
(a) das Gewicht der Kunstfasern in der ersten Schicht im Wesentlichen das vollständige Gesamtgewicht an Fasern in der ersten Schicht umfasst; und/oder
(b) das Gewicht der Kunstfasern in den Filtermedien im Wesentlichen das vollständige Gesamtgewicht an Fasern in den Filtermedien umfasst.

6. Filtermedien nach einem vorstehenden Anspruch, wobei:
(a) die Änderung der Dichte zwischen der Bodenoberfläche zu einer dimensionalen Dicke von 0,25 von der Bodenoberfläche geringer als 15% der Höchstdichte ist; und/oder
(b) die Änderung der Dichte zwischen der Bodenoberfläche zu einer dimensionalen Dicke von 0,35 von der Bodenoberfläche geringer als 15% der Höchstdichte ist; und/oder
(c) die Änderung der Dichte zwischen einer dimensionalen Dicke von 0,5 von der Bodenoberfläche zu 0,75 von der Bodenoberfläche geringer als 15% der Höchstdichte ist.

7. Filtermedien nach einem vorstehenden Anspruch, wobei die erste Schicht einen ersten Bereich beinhaltet, der auf einem zweiten Bereich gebildet ist, wobei ein Bereich der ersten Schicht als der Abschnitt der ersten Schicht definiert ist, der aus demselben Fasertyp gebildet ist, und optional:
(a) weiter einen Übergangsbereich zwischen dem ersten Bereich und dem zweiten Bereich umfasst; und/oder
(b) wobei der zweite Bereich sich von der Bodenoberfläche zu mindestens einer dimensionalen Dicke von 0,25 von der Bodenoberfläche erstreckt.

8. Filtermedien nach Anspruch 7, wobei:
(a) der erste Bereich sich von mindestens einer dimensionalen Dicke von 0,5 von der Bodenoberfläche zu mindestens einer dimensionalen Dicke von 0,75 von der Bodenoberfläche erstreckt; und/oder
(b) der zweite Bereich Fasern umfasst, die einen durchschnittlichen Faserdurchmesser aufweisen, der geringer als ein durchschnittlicher Durchmesser von Fasern in dem ersten Bereich ist.

9. Filtermedien nach einem vorstehenden Anspruch, wobei die Dichte sich mit der Dicke, einer zweistufigen Dichtekurve von der Bodenoberfläche zu der Oberseitenoberfläche folgend, ändert.

10. Filtermedien nach einem vorstehenden Anspruch, wobei die erste Schicht ein Vorfilter ist und die zweite Schicht ein Hauptfilter ist.

11. Filtermedien nach einem vorstehenden Anspruch, wobei die erste Schicht konfiguriert ist, mehr als 70% des Staubs aufzufangen, der von den Filtermedien im Zuge eines Staubhaltekapazitätstests aufgefangen wird.

12. Filtermedien nach einem vorstehenden Anspruch, wobei die zweite Schicht mehrere Schichten beinhaltet.

13. Filtermedien nach einem vorstehenden Anspruch, wobei die zweite Schicht eine schmelzgeblasene Schicht umfasst.

14. Filtermedien nach einem vorstehenden Anspruch, wobei die erste Schicht eine nassgelegte Schicht umfasst.

15. Hydraulisches Filterelement, umfassend die Filtermedien nach einem vorstehenden Anspruch.

## Revendications

1. Milieu filtrant comprenant au moins une première couche comprenant des fibres synthétiques, dans lequel le poids des fibres synthétiques comprend au moins 90 % du poids total de fibres dans la première couche,
la première couche présentant une surface inférieure et une surface supérieure et une épaisseur qui s'étend de la surface inférieure à la surface supérieure,
la première couche présentant une densité qui change d'une densité maximum à une densité minimum,
dans lequel la densité change de manière non-linéaire avec une épaisseur de la surface supérieure à la surface inférieure,
dans lequel le changement de densité entre la surface inférieure et une épaisseur dimensionnelle de 0,25 à partir de la surface inférieure est inférieur à 20 % de la densité maximum, et
dans lequel le changement de densité entre une épaisseur dimensionnelle de 0,5 à partir de la surface inférieure à 0,75 à partir de la surface inférieure est inférieur à 20 % de la densité maximum.

2. Milieu filtrant selon la revendication 1, comprenant en outre :
une seconde couche comprenant des fibres et adjacente à la surface inférieure de la première couche.

3. Milieu filtrant selon l'une quelconque des revendications précédentes, dans lequel :
le changement de densité entre la surface inférieure et une épaisseur dimensionnelle de 0,35 à partir de la surface inférieure est inférieur à 12 % de la densité maximum ; et/ou
la densité entre une épaisseur dimensionnelle de 0,5 à partir de la surface inférieure et une épaisseur dimensionnelle de 0,75 à partir de la surface inférieure est entre 65 % et 75 % de la densité maximum.

4. Milieu filtrant selon l'une quelconque des revendications précédentes, dans lequel :
(a) le poids des fibres synthétiques dans la première couche comprend au moins 90 % du poids total de fibres dans la première couche ; et/ou
(b) le poids des fibres synthétiques dans le milieu filtrant comprend au moins 90 % du poids total de fibres dans le milieu filtrant.

5. Milieu filtrant selon l'une quelconque des revendications précédentes, dans lequel :
(a) le poids des fibres synthétiques dans la première couche comprend sensiblement tout le poids total de fibres dans la première couche ; et/ou
(b) le poids des fibres synthétiques dans le milieu filtrant comprend sensiblement tout le poids total de fibres dans le milieu filtrant.

6. Milieu filtrant selon l'une quelconque des revendications précédentes, dans lequel :
(a) le changement de densité entre la surface inférieure et une épaisseur dimensionnelle de 0,25 à partir de la surface inférieure est inférieur à 15 % de la densité maximum ; et/ou
(b) le changement de densité entre la surface inférieure et une épaisseur dimensionnelle de 0,35 à partir de la surface inférieure est inférieur à 15 % de la densité maximum ; et/ou
(c) le changement de densité entre une épaisseur dimensionnelle de 0,5 à partir de la surface inférieure à 0,75 à partir de la surface inférieure est inférieur à 15 % de la densité maximum.

7. Milieu filtrant selon l'une quelconque des revendications précédentes, dans lequel la première couche inclut une première région formée sur une seconde région, dans lequel une région de la première couche est définie comme la portion de la première couche formée à partir du même type de fibres, et, en option :
(a) comprenant en outre une région de transition entre la première région et la seconde région ; et/ou
(b) dans lequel la seconde région s'étend depuis la surface inférieure à au moins une épaisseur dimensionnelle de 0,25 à partir de la surface inférieure.

8. Milieu filtrant selon la revendication 7, dans lequel :
(a) la première région s'étend à partir d'au moins une épaisseur dimensionnelle de 0,5 à partir de la surface inférieure à au moins une épaisseur dimensionnelle de 0,75 à partir de la surface inférieure ; et/ou
(b) la seconde région comprend des fibres présentant un diamètre moyen de fibres inférieur à un diamètre moyen de fibres dans la première région.

9. Milieu filtrant selon l'une quelconque des revendications précédentes, dans lequel la densité change avec l'épaisseur suivant une courbe de densité à deux niveaux de la surface inférieure à la surface supérieure.

10. Milieu filtrant selon l'une quelconque des revendications précédentes, dans lequel la première couche est un préfiltre et la seconde couche est un filtre principal.

11. Milieu filtrant selon l'une quelconque des revendications précédentes, dans lequel la première couche est configurée pour capturer plus de 70 % de la poussière capturée par le milieu filtrant suivant un essai de capacité de retenue de poussières.

12. Milieu filtrant selon l'une quelconque des revendications précédentes, dans lequel la seconde couche inclut de multiples couches.

13. Milieu filtrant selon l'une quelconque des revendications précédentes, dans lequel la seconde couche comprend une couche obtenue par fusion-soufflage.

14. Milieu filtrant selon l'une quelconque des revendications précédentes, dans lequel la première couche comprend une couche formée par voie humide.

15. Elément de filtre hydraulique comprenant le milieu filtrant selon l'une quelconque des revendications précédentes.
